# EUROPEAN PATENT SPECIFICATION

(11) **EP 2 819 324 B1**
(45) Date of publication and mention of the grant of the patent: **28.03.2018**
(21) Application number: 12760021.1
(22) Date of filing: 05.04.2012
(51) Int. Cl.: H04B 10/071, H04B 10/077, H04B 10/40

(54) **OPTICAL TRANSCEIVING MODULE, PASSIVE OPTICAL NETWORK SYSTEM, OPTICAL FIBRE DETECTION METHOD AND SYSTEM**
OPTISCHES SENDE-/EMPFANGSMODUL, PASSIVES OPTISCHES NETZWERKSYSTEM, GLASFASERDETEKTIONSVERFAHREN UND SYSTEM
MODULE D'ÉMISSION-RÉCEPTION OPTIQUE, SYSTÈME DE RÉSEAU OPTIQUE PASSIF, PROCÉDÉ ET SYSTÈME DE DÉTECTION DE FIBRE OPTIQUE

(30) Priority: 21.02.2012 WO PCT/CN2012/071400
(43) Date of publication of application: 31.12.2014
(73) Proprietor: Huawei Technologies Co., Ltd., Longgang District Shenzhen, Guangdong 518129 (CN)
(72) Inventor: YIN, Jinrong, Shenzhen Guangdong 518129 (CN); YANG, Sulin, Shenzhen Guangdong 518129 (CN)
(74) Representative: Maiwald Patentanwalts GmbH
(86) International application number: PCT/CN2012/073547
(87) International publication number: WO 2012/126403

(56) References cited:
- EP-A1- 2 383 908
- WO-A1-2010/043056
- CN-A- 101 043 272
- CN-A- 101 790 111
- CN-A- 102 187 603
- CN-A- 102 244 538
- CN-A- 102 281 100

## Description

### TECHNICAL FIELD

This application relates to optical communications technologies, and in particular, to an optical transceiver module, and a passive optical network (Passive Optical Network, PON) system, method and system for detecting fiber.

### BACKGROUND

As a user's demand on bandwidth grows continuously, a traditional copper-cable broadband access system is increasingly bottlenecked by bandwidth. Meanwhile, optical communications technologies with an enormous bandwidth capacity are increasingly mature, and application costs are declining year by year. A fiber access network becomes a strong competitor in next-generation broadband access networks, in which a passive optical network is especially more competitive.

Generally, a passive optical network system includes an optical line terminal (Optical Line Terminal, OLT) located in a central office, multiple optical network units (Optical Network Unit, ONU) located on a user side, and an optical distribution network (Optical Distribution Network, ODN) that is used to perform branching/coupling or multiplexing/demultiplexing for optical signals between the optical line terminal and the optical network units. The optical line terminal and the optical network units receive and transmit uplink and downlink data by using an optical transceiver module (or called a data transceiver optical module) arranged inside.

In the field of optical communications, an optical time domain reflectrometer (Optical Time Domain Reflectrometer, OTDR) is a commonly used fiber test instrument. By transmitting a test signal to an optical network to be tested and detecting a backward reflection signal and a scattered signal of the test signal, where the reflection and the scattering occur in the optical network to be tested, the OTDR obtains status information of an optical line, thereby providing a means of fast analysis and fault locating for maintenance of the optical network.

To simplify a network structure and implement real-time monitoring for the optical distribution network, it is put forward in the industry that the OTDR test function should be integrated into the optical transceiver module to implement an integrated OTDR (also called EOTDR). In an existing optical transceiver module that the OTDR test function is integrated into, an OTDR test signal and a downlink data signal use a same wavelength and share a same optical transmission component for signal transmission. When fiber detection is being performed, the OTDR test signal overlaps the downlink data signal by means of amplitude modulation and is transmitted to the optical distribution network. Rayleigh scattering or reflection occurs on the OTDR test signal at a point of an event such as bending, a break or a loose connection of a fiber during transmission in the optical distribution network; therefore, a reflection signal that is returned along an original way is generated. The reflection signal is further received by an OTDR detector inside the optical transceiver module. Further, an OTDR processor inside the optical line terminal may analyze the reflection signal and calculate a line attenuation of the optical distribution network and an OTDR test curve indicative of each fiber event point.

However, in a passive optical network system, the optical distribution network generally uses a passive optical splitter to perform branching/coupling of a signal. Because the optical splitter incurs relatively great power loss, it is difficult for the optical transceiver module with the shared optical transmission component to directly implement fault locating accountability and fault sectionalization for a drop fiber. Therefore, when the fiber is detected using the foregoing solution, another means is still required, for example, adding an optical reflector to the drop fiber for fault locating. This not only will increase costs but also will increase construction difficulty. WO2010043056A1 discloses a method of distinguishing a wavelength-dependent reflective element from wavelength-independent events in an optical network, the reflective element being highly-reflective at a first predetermined wavelength and significantly less reflective at at least one other predetermined wavelength.

EP2383908A1 discloses a detecting method, an apparatus, and a system in an Optical Distribution Network. The method includes: an Optical Line Termination, OLT, reserves a test window, and an Optical Network Unit, ONU, stops sending an uplink signal in the test window, the OLT emits a downlink test signal having a wavelength the same as that of the uplink signal in the test window, the OLT receives backward signals of the downlink test signal, in which the backward signals include a backward scattered signal and a backward reflected signal, processes the backward signals, and obtains state information of the ODN according to the backward signals.

### SUMMARY

In view of the foregoing problems, this application provides an optical transceiver module that can be used to implement fault locating accountability and fault sectionalization for a drop fiber. In addition, this application further provides a passive optical network system and device that use the optical transceiver module, and a fiber detection method and system.

An optical transceiver module includes an optical component and a drive component connected to the optical component, where the optical component includes: a data signal transmitter, configured to transmit a first data signal that carried by a first wavelength, and transmit a first test signal that has the first wavelength to an optical network under control of the drive component, wherein the first data signal is downstream data signal, wherein the first test signal is downstream test signal; a test signal receiver, configured to receive a first reflection signal returned as a result of reflection of the first test signal that occurs in the optical network; a test signal transmitter, configured to transmit a second test signal that carried by a second wavelength to the optical network under control of the drive component, wherein the second test signal is upstream test signal; and a data signal receiver, configured to receive a second data signal that has the second wavelength and receive a second reflection signal returned as a result of reflection of the second test signal that occurs in the optical network.

A passive optical network system includes an optical line terminal, multiple optical network units and an optical distribution network, where the optical line terminal is connected to the multiple optical network units through the optical distribution network, the optical line terminal and/or the optical network units include an optical transceiver module that a test function is integrated into, and the optical transceiver module is the optical transceiver module described above.

An optical line terminal includes a data processing module and an optical transceiver module, where the optical transceiver module is the optical transceiver module described above, the data processing module is configured to provide a first data signal for the optical transceiver module for transmission and perform data processing for the optical transceiver module with reference to a received second data signal, and the data processing module is further configured to analyze an optical line according to a first reflection signal and a second reflection signal that are received by the optical transceiver module.

A fiber detection method of a passive optical network includes: when a fault occurs in the passive optical network, determining whether the fault occurs on a feeder fiber or a distribution fiber of an optical distribution network; if yes, using a downstream wavelength to send a first test signal to the optical distribution network, and locating the fault of the feeder fiber or the distribution fiber according to a reflection signal of the first test signal; and if no, using an upstream wavelength to send a second test signal to the optical distribution network, and, according to a reflection signal of the second test signal, determining a drop fiber or an optical network unit on which the fault occurs.

A fiber detection system includes an optical line terminal, multiple optical network units, and an optical distribution network, where the optical line terminal is connected to the multiple optical network units through the optical distribution network; the optical distribution network includes a first-level optical splitter and multiple second-level optical splitters, where the first-level optical splitter is connected to the optical line terminal by using a feeder fiber and connected to the multiple second-level optical splitters by using distribution fibers, and the multiple second-level optical splitters are connected to the optical network units separately by using drop fibers; the optical line terminal includes an optical transceiver module, where the optical transceiver module is configured to send a first test signal to the optical distribution network by using a downstream wavelength and locate a fault of the feeder fiber or the distribution fibers according to a reflection signal of the first test signal, and the optical transceiver module is also configured to: send a second test signal to the optical distribution network by using an upstream wavelength, and, according to a reflection signal of the second test signal, determine a drop fiber or an optical network unit on which the fault occurs.

The optical transceiver module provided in this application uses dual-wavelength test signals, where a first test signal and a first data signal share an optical transmission component, and a second test signal and a second data signal share an optical receiving component. With such configurations, the optical transceiver module can receive a first reflection signal and a second reflection signal that correspond to the first test signal and the second test signal. According to the first reflection signal and the second reflection signal, a first test curve and a second test curve can be obtained, thereby implementing fault locating for a feeder fiber and a distribution fiber on an optical network and implementing line analysis, fault locating accountability and fault sectionalization for a drop fiber and an optical network unit without using auxiliary test approaches. Therefore, the optical transceiver module provided in this application can perform fault detection and diagnostic analysis for an optical network simply and efficiently, which not only can reduce OTDR test costs effectively but also can reduce construction difficulty.

### BRIEF DESCRIPTION OF DRAWINGS

FIG. 1 is a schematic structural diagram of a passive optical network system;
FIG. 2 is a schematic structural diagram of an optical transceiver module according to an embodiment of this application;
FIG. 3 is a schematic flowchart of a fiber detection method according to an embodiment of this application;
FIG. 4 is a schematic structural diagram of an optical component of an optical transceiver module according to another embodiment of this application;
FIG. 5 is a schematic structural diagram of an optical component of an optical transceiver module according to still another embodiment of this application;
FIG. 6 is a schematic structural diagram of an optical component of an optical transceiver module according to still another embodiment of this application;
FIG. 7 is a schematic structural diagram of an optical component of an optical transceiver module according to still another embodiment of this application;
FIG. 8 is a schematic structural diagram of an optical component of an optical transceiver module according to still another embodiment of this application;
FIG. 9 is a schematic structural diagram of an optical component of an optical transceiver module according to still another embodiment of this application; and
FIG. 10 is a schematic structural diagram of an optical component of an optical transceiver module according to still another embodiment of this application.

### DESCRIPTION OF EMBODIMENTS

The following describes, in detail with reference to specific embodiments, an optical transceiver module and a fiber detection method and system provided in this application.

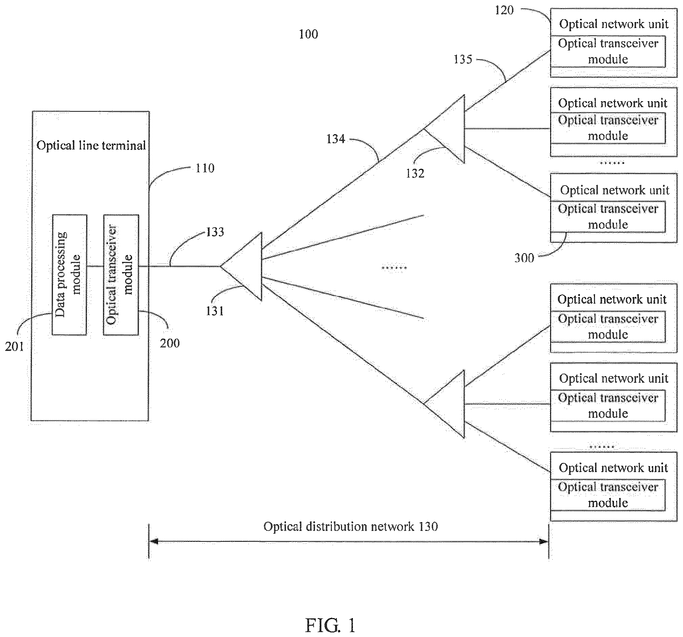

The optical transceiver module provided in this application is applicable to a point-to-multipoint optical network such as a passive optical network system. Refer to FIG. 1, which is a schematic structural diagram of a passive optical network system. The passive optical network system 100 includes at least one optical line terminal 110, multiple optical network units 120, and one optical distribution network 130. The optical line terminal 110 is connected to the multiple optical network units 120 through the optical distribution network 130. A direction from the optical line terminal 110 to the optical network units 120 is defined as a downstream direction, and a direction from the optical network units 120 to the optical line terminal 110 is an upstream direction.

The passive optical network system 100 may be a communications network that implements data distribution between the optical line terminal 110 and the optical network units 120 without requiring any active component. For example, in a specific embodiment, the data distribution between the optical line terminal 110 and the optical network units 120 may be implemented by using a passive optical component (such as an optical splitter) in the optical distribution network 130. In addition, the passive optical network system 100 may be an asynchronous transfer mode passive optical network (ATM PON) system or a broadband passive optical network (BPON) system defined in the ITU-T G.983 standard, a gigabit passive optical network (GPON) system defined in the ITU-T G.984 standard, an Ethernet passive optical network (EPON) defined in the IEEE 802.3ah standard, or a next-generation passive optical network (NGA PON, such as XGPON or 10G EPON).

The optical line terminal 110 is generally located in a central position (such as a central office Central Office, CO) and can manage one or more optical network units 120 together. The optical line terminal 110 may act as a medium between the optical network units 120 and an upper-layer network (not shown in the drawing), use data received from the upper-laycr network as downstream data, forward the data to the optical network units 120 through the optical distribution network 130, and forward upstream data received from the optical network units 120 to the upper-layer network.

A specific structural configuration of the optical line terminal 110 may vary with a specific type of the passive optical network system 100. For example, in an embodiment, the optical line terminal 110 may include an optical transceiver module 200 and a data processing module 201. The optical transceiver module 200 may send a downstream data signal provided by the data processing module 201 to the optical network units 120 through the optical distribution network 130, receive an upstream data signal, which is sent by the optical network units 120 through the optical distribution network 130, and provide the upstream data signal for the data processing module 201 for data processing. In addition, in a specific embodiment, an OTDR test function may also be integrated into the optical transceiver module 200. For example, the optical transceiver module 200 may further send a test signal to the optical distribution network 130, receive a reflection signal returned after the test signal undergoes scattering or reflection in the optical distribution network 130, obtain a test curve according to the reflection signal, and further perform optical line status analysis and fault locating.

The test signal sent by the optical transceiver module 200 may be a single-wavelength signal. For example, the test signal may use a same wavelength (that is, a downstream wavelength) as that of the downstream data signal and share an optical transmission component, or use a same wavelength (that is, an upstream wavelength) as that of the upstream data signal and share an optical receiving component. In an exemplary embodiment, the test signal may further be a dual-wavelength signal. For example, the test signal may include a first OTDR test signal and a second OTDR test signal that have different wavelengths, where the wavelength of the first OTDR test signal may be the same as the downstream wavelength, and the first OTDR test signal and the downstream data signal may share an optical transmission component; the wavelength of the second OTDR test signal may be the same as the upstream wavelength, and the first OTDR test signal and the upstream data signal may share an optical receiving component.

The optical network units 120 may be arranged in user-side locations (such as customer premises) in a distributed manner. The optical network units 120 may be network devices used to communicate with the optical line terminal 110 and users. Specifically, the optical network units 120 may act as media between the optical line terminal 110 and the users. For example, the optical network units 120 may forward downstream data received from the optical line terminal 110 to the users, and forward data, which is received from the users, as upstream data to the optical line terminal 110 through the optical distribution network 130. It should be understood that structures of the optical network units 120 are close to that of an optical network terminal (Optical Network Terminal, ONT). Therefore, in the solution provided in this application document, an optical network unit is interchangeable with an optical network terminal.

A specific structural configuration of the optical network units 120 may vary with the specific type of the passive optical network 100. For example, in an embodiment, the optical network units 120 may include an optical transceiver module 300, which is configured to receive the downstream data signal that is sent by the optical line terminal 110 through the optical distribution network 130 and send the upstream data signal to the optical line terminal 110 through the optical distribution network 130. A specific structure of the optical transceiver module 300 may be similar to that of the optical transceiver module 200 of the optical line terminal 110. For example, the OTDR test function may also be integrated into the optical transceiver module 300. Specifically, the optical transceiver module 200 may further send a test signal to the optical distribution network 130, receive a reflection signal returned as a result of backscattering or reflection of the test signal that occurs in the optical distribution network 130, and perform optical line status analysis and fault locating according to the reflection signal. The test signal may be a single-wavelength signal. Alternatively, the test signal may also be a dual-wavelength signal. For example, the test signal may include a first OTDR test signal and a second OTDR test signal, where the wavelength of the first OTDR test signal may be the same as the downstream wavelength, and the wavelength of the second OTDR test signal may be the same as the upstream wavelength.

The optical distribution network 130 may be a data distribution system, and may include a fiber, an optical coupler, an optical splitter and/or other devices. In an embodiment, the fiber, the optical coupler, the optical splitter and/or other devices may be passive optical components. Specifically, the fiber, the optical coupler, the optical splitter and/or other devices may be components that do not require power supplies when data signals are distributed between the optical line terminal 110 and the optical network units 120. In addition, in another embodiment, the optical distribution network 130 may further include one or more processing devices such as an optical amplifier or a relay device (Relay device). In a branch structure shown in FIG. 1, the optical distribution network 130 may specifically extend from the optical line terminal 110 to the multiple optical network units 120 by means of two-level splitting, but may also be configured as any other point-to-multipoint (such as single-level splitting or multi-level splitting) or point-to-point structure.

Refer to FIG. 1. The optical distribution network 130 uses an optical splitter to implement data distribution. In view of reliability and operation and maintenance aspects, the optical distribution network 130 may be deployed by means of two-level splitting and include a first-level optical splitter 131 and multiple second-level optical splitters 132. A common end of the first-level optical splitter 131 is connected to the optical transceiver module 200 of the optical line terminal 110 by using a feeder fiber (Feeder Fiber) 133, and branch ends of the first-level optical splitter are correspondingly connected to common ends of the second-level optical splitters 132 separately by using distribution fibers (Distribution Fiber). A drop end of each second-level optical splitter 132 is further connected to the optical transceiver module 300 of the corresponding optical network unit 120 separately by using a drop fiber (Drop Fiber) 135. In the downstream direction, a downstream data signal sent by the optical line terminal 110 undergoes first optical splitting in the first-level optical splitter 131, and then generated signals undergoes second optical splitting in the second-level optical splitter 132; therefore, multiple channels of downstream signals are generated and then transmitted to each optical network unit 120. In the upstream direction, upstream data signals sent by the optical network units 120 are combined by the second-level optical splitter 132 and the first-level optical splitter 131 sequentially and then transmitted to the optical line terminal 110. The first-level optical splitter 131 may be deployed in an optical distribution frame (Optical Distribution Frame, ODF) that is relatively close to a central office, and the second-level optical splitter 132 may be deployed at a remote node (Remote Node, RN).

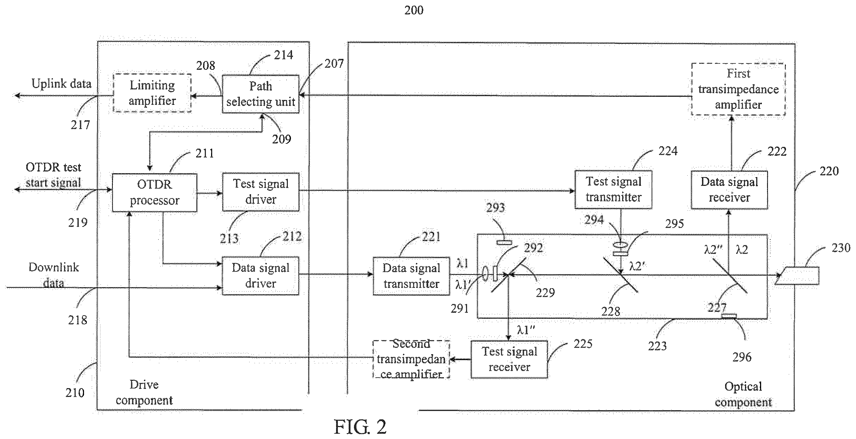

The following describes, in detail with reference to FIG. 2, a specific implementation solution of an optical transceiver module provided in this application. As described above, the optical transceiver module 200 of the optical line terminal 110 and the optical transceiver module 300 of the optical network units 120 have similar structures. Therefore, the following primarily describes a structure and functions of the optical transceiver module 200 only. A person skilled in the art may refer to the following description about the optical transceiver module 200 to learn an implementation manner of the optical transceiver module 300.

Refer to FIG. 2, which is a schematic structural diagram of the optical transceiver module 200 according to an embodiment of this application. The optical transceiver module 200 may be a single-fiber bidirectional optical module that has an embedded OTDR test function. The optical transceiver module 200 includes a drive component 210 and an optical component 220. The drive component 210 is configured to drive the optical component 220, and the optical component 220 is configured to transmit and receive a test signal and a data signal as driven by the drive component 210. Optionally, the drive component 210 may further preprocess the test signal and/or the data signal received by the optical component 220.

For ease of understanding, an example in which the optical transceiver module 200 is applied to the optical line terminal 110 shown in FIG. 1 is used in the following description. The optical component 220 may first be connected to the feeder fiber 133 of the optical distribution network 130 by using a fiber adapter 230, and then send a downstream data signal to the optical network units 120 through the optical distribution network 130 and receive upstream data signals sent by the optical network units 120. Specifically, the optical component 220 may include a data signal transmitter 221, a data signal receiver 222, and a filtering component 223. The data signal transmitter 221 may be a laser diode (Laser Diode, LD) and is configured to transmit a downstream data signal that has a first wavelength λ1 (denoted by a downstream data signal λ1 hereinafter). The data signal receiver 222 may be a photodiode (photodiode, PD) such as an avalanche photodiode (avalanche photodiode, APD) and is configured to receive an upstream data signal that has a second wavelength λ2 (denoted by an upstream data signal λ2 hereinafter). The filtering component 223 may couple at least part of the downstream data signal λ1, which is transmitted by the data signal transmitter 221, to the fiber adapter 230, and couple at least part of the upstream data signal λ2, which is input from the fiber adapter 230, to the data signal receiver 222.

In an embodiment, the filtering component 223 may include a first wavelength division multiplexing (Wavelength Division Multiplexing, WDM) filter 227, a second wavelength division multiplexing filter 228, and an optical splitter filter 229. The first wavelength division multiplexing filter 227, the second wavelength division multiplexing filter 228, and the optical splitter filter 229 may be arranged sequentially on a main optical path inside the optical component 220 in an extension direction of the fiber adapter 230, and there is a certain angle between them and the main optical path. The first wavelength division multiplexing filter 227 can transmit approximately 100% of an optical signal that has the first wavelength λ1, and reflect approximately y% and transmit approximately (100-y)% of an optical signal that has the second wavelength λ2. The second wavelength division multiplexing filter 228 can transmit approximately 100% of the optical signal that has the first wavelength λ1, and reflect approximately 100% of the signal that has the second wavelength λ2. The optical splitter filter 229 can transmit approximately x% and reflect approximately (100-x)% of the optical signal that has the first wavelength λ1. In a specific embodiment, values of x and y may both be 90, and the first wavelength λ1 and the second wavelength λ2 may be 1490 nm and 1310 nm respectively, or 1577 nm and 1270 nm respectively.

Transmissive optical paths of the first wavelength division multiplexing filter 227, the second wavelength division multiplexing filter 228, and the optical splitter filter 229 overlap the main optical path of the optical component 220, and reflective optical paths of the first wavelength division multiplexing filter 227, the second wavelength division multiplexing filter 228, and the optical splitter filter 229 are basically perpendicular to the main optical path. The data signal transmitter 221 is coupled to the transmissive optical path of the optical splitter filter 229, and the data signal receiver 222 is coupled to the reflective optical path of the first wavelength division multiplexing filter 227. Therefore, in the optical component 220, approximately x% of the downstream data signal λ1 transmitted by the data signal transmitter 221 can penetrate through the optical splitter filter 229, the second wavelength division multiplexing filter 228 and the first wavelength division multiplexing filter 227 and be output by the fiber adapter 230; approximately y% of the upstream data signal λ2 input by the fiber adapter 230 can be reflected to the data signal receiver 222, received by the data signal receiver 222 and converted into an electric signal.

Further, in this embodiment, the data signal transmitter 221 may be further configured to transmit a first OTDR test signal that has the first wavelength λ1 (denoted by a first OTDR test signal λ1' hereinafter). That is, the first OTDR test signal λ1' and the downstream data signal λ1 may share the data signal transmitter 221. At least part of the first OTDR test signal λ1' can also penetrate through the optical splitter filter 229, the second wavelength division multiplexing filter 228, and the first wavelength division multiplexing filter 227, be transmitted to the fiber adapter 230, and be further output to the optical distribution network 130 by the fiber adapter 230. In a specific embodiment, sending of the first OTDR test signal λ1' and sending of the downstream data signal λ1 may be relatively independent of each other. For example, when the first OTDR test signal λ1' is sent, the data signal transmitter 221 suspends the sending of the downstream data signal λ1. Alternatively, the first OTDR test signal λ1' may also overlap the downstream data signal λ1 by means of amplitude modulation to form an overlapped signal, which is then output from the fiber adapter 230 to the optical distribution network 130.

In an embodiment, the optical component 220 may further include a test signal receiver 225 and a test signal transmitter 224. The test signal receiver 225 may be coupled to the reflective optical path of the optical splitter filter 229, and the test signal transmitter 224 may be coupled to the reflective optical path of the second wavelength division multiplexing filter 228.

The test signal receiver 225 may be configured to receive a reflection signal corresponding to the first OTDR test signal λ1' (denoted by a first reflection signal λ1'' hereinafter). Specifically, when transmitted in the optical distribution network 130, the first OTDR test signal λ1' may be reflected or scattered to form the first reflection signal λ1". The first reflection signal λ1'' also has the first wavelength λ1, is returned along an original way, and is input to the optical component 220 by the fiber adapter 230. In the optical component 220, the first reflection signal λ1" may further penetrate through the first wavelength division multiplexing filter 227 and the second wavelength division multiplexing filter, and be transmitted to the optical splitter filter 229. In addition, in the optical splitter filter 229, approximately (100-x)% of the first reflection signal λ1'' will be reflected to the test signal receiver 225 and received by the test signal receiver 225. After receiving the first reflection signal λ1", the test signal receiver 225 may further convert the first reflection signal into an electric signal and provide the electric signal for an OTDR processor 211 in the drive component 210 for signal processing.

The test signal transmitter 224 may be configured to transmit a second OTDR test signal that has the second wavelength λ2 (denoted by a second OTDR test signal λ2' hereinafter). Approximately 100% of the second OTDR test signal λ2' can be reflected to the main optical path of the optical component 220 by using the second wavelength division multiplexing filter 228, and approximately (100-y)% of the second OTDR test signal λ2' can further penetrate through the first wavelength division multiplexing filter 227 and be transmitted to the fiber adapter 230.

Similar to the first OTDR test signal λ1', the second OTDR test signal λ2' may be output by the fiber adapter 230 to the optical distribution network 130. When transmitted in the optical distribution network 130, the second OTDR test signal λ2' may be reflected or scattered to form a second reflection signal λ2". The second reflection signal λ2" also has the second wavelength λ2, is returned along an original way, and is input to the optical component 220 by the fiber adapter 230. In the optical component 220, the second reflection signal λ2'' may be further transmitted to the first wavelength division multiplexing filter 227 along the main optical path. Approximately y% of the second reflection signal λ2" will be reflected by the first wavelength division multiplexing filter 227 to the data signal receiver 222.

In this embodiment, the data signal receiver 222 not only can receive the upstream data signal λ2 but also can receive the second reflection signal λ2" corresponding to the second OTDR test signal λ2'. That is, the second reflection signal λ2" and the upstream data signal λ2 may share the data signal receiver 222. To prevent conflict between the second reflection signal λ2" and the upstream data signal λ2 that is sent by the optical network units 120, before the transmission of the second OTDR test signal λ2' starts, the driver component 210 may drive, under control of the data processing module 201 of the optical line terminal 110, the data signal transmitter 221 to provide the optical network units 120 with an instruction, where the instruction is used for suspending upstream data from being sent. In addition, after receiving the second reflection signal λ2", the data signal receiver 222 may further convert the second reflection signal λ2" into an electric signal and provide the electric signal for the OTDR processor 211 in the drive component 210 for signal processing.

In addition, optionally, to improve efficiency of coupling between the data signal transmitter 221 and the fiber adapter 230 and ensure that the first OTDR test signal λ1' and/or the downstream data signal λ1 transmitted by the data signal transmitter 221 are coupled into the main optical path and output by the fiber adapter 230 as much as possible, a first lens 291 may be added between the data signal transmitter 221 and the optical splitter filter 229.

Optionally, to protect the data signal transmitter 221 and prevent damage to the data signal transmitter 221, which is caused by the return of the first reflection signal λ1'' along the original way, a first optoisolator 292 may be added between the data signal transmitter 221 and the optical splitter filter 229 to prevent the first reflection signal λ1" from entering the data signal transmitter 221.

Optionally, the optical component 220 may further include a first optical absorber 293. The first optical absorber 293 may be arranged on a side of the optical splitter filter 229 away from the test signal receiver 225. The first optical absorber 293 may be configured to absorb an optical signal generated as a result of reflection of the first OTDR test signal λ1' that occurs at the optical splitter filter 229, where the first OTDR test signal is transmitted by the data signal transmitter 221, so as to prevent the optical signal from being reflected for a second time by a base of the optical component 220 and/or an inner surface of a tube cap of the test signal transmitter 224, penetrating through the optical splitter filter 229 and being received by the test signal receiver 225 to cause interference to the first reflection signal λ1".

Similarly, to improve efficiency of coupling between the test signal transmitter 224 and the fiber adapter 230 and ensure that the second OTDR test signal λ2' transmitted by the data signal transmitter 224 is coupled into the main optical path and output by the fiber adapter 230 as much as possible, optionally, a second lens 294 may be added between the test signal transmitter 224 and the second wavelength division multiplexing filter 228.

To protect the test signal transmitter 224 and prevent damage to the test signal transmitter 224, which is caused by the return of the second reflection signal λ2" along the original way, optionally, a second optoisolator 295 may be added between the test signal transmitter 224 and the second wavelength division multiplexing filter 228 to prevent the second reflection signal λ2" from entering the test signal transmitter 224.

Optionally, the optical component 220 may further include a second optical absorber 296. The second optical absorber 296 may be arranged on a side of the first wavelength division multiplexing filter 227 away from the data signal receiver 222. The second optical absorber 296 may be configured to absorb an optical signal generated as a result of reflection of the second OTDR test signal λ2' that occurs at the first wavelength division multiplexing filter 227, where the second OTDR test signal is transmitted by the test signal transmitter, so as to prevent the optical signal from being reflected for a second time by the base of the optical component 220, penetrating through the first wavelength division multiplexing filter 227 and being received by the data signal receiver 222 to cause interference to the second reflection signal λ2".

Optionally, the optical component 220 may further include a first transimpedance amplifier (transimpedance amplifier, TIA) and a second transimpedance amplifier. The second transimpedance amplifier is arranged between the test signal receiver 225 and the drive component 210, and is configured to perform signal pre-amplification after the test signal receiver 225 performs optical-to-electrical conversion for the first reflection signal λ1". The first transimpedance amplifier is arranged between the data signal receiver 222 and the drive component 210, and is configured to perform signal pre-amplification after the data signal receiver 222 performs optical-to-electrical conversion for the upstream data signal λ2 or the second reflection signal λ2". Alternatively, the first transimpedance amplifier and the second transimpedance amplifier may also be arranged inside the drive component 210.

In this embodiment, the first OTDR test signal λ1' may be primarily used to detect a fiber event that occurs on the feeder fiber 133 and a distribution fiber 134 of the optical distribution network 130, so as to implement fault locating of the feeder fiber 133 and the distribution fiber 134. The second OTDR test signal λ2' is transmitted by the dedicated test signal transmitter 224 and may be primarily used to detect a fiber event that occurs on the drop fiber 135 of the optical distribution network 130 and on the optical network units 120, so as to implement fault locating accountability and fault sectionalization of the drop fiber 135 and the optical network units 120.

The drive component 210 may include an OTDR processor 211, a data signal driver 212, a test signal driver 213, and a path selecting unit 214. The path selecting unit 214 includes an input end 207, a data signal output end 208, and a test control end 209. The input end 207 of the path selecting unit 214 is connected to the optical component 220, the data signal output end 208 of the path selecting unit 214 may be connected to a signal output end 217 of the drive component 210 by using a limiting amplifier, and the test control end 209 of the path selecting unit 214 is connected to the OTDR processor 211. Alternatively, the data signal output end 208 of the path selecting unit 214 may also be directly connected to the signal output end 217 of the drive component, and the limiting amplifier is arranged between the input end 207 of the path selecting unit 214 and the optical component 220.

In a specific embodiment, to reduce impact of the test control end 209 of the path selecting unit 214 on data receiving, optionally, the path selecting unit 214 may use the following structure. The input end 207 of the path selecting unit 214 is directly connected to the data signal output end 208, and a circuit for implementing path selection is arranged between the input end 207 and the test control end 209. In addition, under control of the OTDR processor 211 and by using the input end 207 of the path selecting unit 214, the path selecting unit 214 may provide two channels of optical signals directed to the data output end 208 and the test control end 209.

Specifically, by using the input end 207 of the path selecting unit 214, the path selecting unit 214 may receive the upstream data signal λ2 or the second reflection signal λ2" output by the data signal receiver 222 of the optical component 220, and the path selecting unit 214 may further perform selective signal forwarding under control of the OTDR processor 211. For example, in a normal data communication mode, the path selecting unit 214 may create a transmission path between the input end 207 and the data signal output end 208 and disconnect a transmission path between the input end 207 and the test control end 209; therefore, the upstream data signal λ2 received by the optical component 220 is forwarded to the signal output end 217, and the upstream data signal λ2 is provided for the data processing module 201 of the optical line terminal 110. In an OTDR test mode, the path selecting unit 214 may receive a corresponding path switching command from the OTDR processor 211 by using the test control end 209, disconnect the transmission path between the input end 207 and the data signal output end 208, and create the transmission path between the input end 207 and the test control end 209; therefore, the second reflection signal λ2" output by the optical component 220 is provided, by using the test control end 209, for the OTDR processor 211 for signal processing.

The OTDR processor 211 is connected to the data signal driver 212, the test signal driver 213, and the path selecting unit 214 separately. The data signal driver 212 and the test signal driver 213 are further connected to the data signal transmitter 221 and the test signal transmitter 224 of the optical component 220 respectively. The data signal driver 212 is configured to drive the data signal transmitter 221 to transmit the downstream data signal λ1 and/or the first OTDR test signal λ1', and the test signal driver 213 is configured to drive the test signal transmitter 224 to transmit the second OTDR test signal λ2'. It should be understood that the test signal driver 213 is optional. In alternative embodiments, the OTDR processor 211 may also directly drive the test signal transmitter 224 to transmit the second OTDR test signal λ2'.

In the normal data communication mode, the data signal driver 212 may receive downstream data from the data processing module 201 of the optical line terminal 110 by using the signal input end 218, and modulate the downstream data to the optical signal of the first wavelength λ1 that is transmitted by the data signal transmitter 221, thereby forming and outputting the downstream data signal λ1. In the OTDR test mode, the data signal driver 212 may also receive first OTDR test data from the OTDR processor 211, and modulate the first OTDR test data to the optical signal of the first wavelength λ1 that is transmitted by the data signal transmitter 221, thereby forming and outputting the first OTDR test signal λ1'. In a specific embodiment, after the optical transceiver module 200 starts an OTDR test, the data signal driver 212 may suspend, under control of the data processing module 201 of the optical line terminal 110, sending of the downstream data of the data signal transmitter 221. Alternatively, the data signal driver 21 may also keep the sending of the downstream data from the data signal transmitter 221, and overlap the first OTDR test signal λ1' with the downstream data signal λ1 by means of amplitude modulation to form an overlapped signal.

In addition, in the OTDR test mode, the OTDR processor 211 may provide second OTDR test data for the test signal driver 213. The data signal driver 212 may modulate the second OTDR test data to the optical signal of the second wavelength λ2 that is transmitted by the data signal transmitter 221, thereby forming and outputting the second OTDR test signal λ2'. Alternatively, the OTDR processor 211 may directly modulate the second OTDR test data to the optical signal of the second wavelength λ2 that is transmitted by the data signal transmitter 221, thereby forming and outputting the second OTDR test signal λ2'.

In the normal data communication mode, the OTDR processor 211 may be in a standby state or a low power consumption state. Correspondingly, in this case, the transmission path between the input end 207 of the path selecting unit 214 and the data signal output end 208 is connected up. When the OTDR processor 211 receives an OTDR test start signal from the data processing module 201 of the optical line terminal 110 by using an I2C interface (or another control signal cable) 219, the OTDR processor may control a related function unit of the optical transceiver module 200 to enter the OTDR test mode, for example, control the path selecting unit 214 to disconnect the transmission path between the input end 207 and the data signal output end 208 and create the transmission path between the input end 207 and the test control end 209.

In the OTDR test mode, the OTDR processor 211 may further be connected to the test signal receiver 225 or the second transimpedance amplifier of the optical component 220, and may be configured to receive the first reflection signal λ1" output by the test signal receiver 225 of the optical component 220, use the path selecting unit 214 to receive the second reflection signal λ2'' output by the data signal receiver 222 of the optical component 220, and perform signal preprocessing (including signal amplification, sampling and digital processing) for the first reflection signal λ1" and the second reflection signal λ2" separately. Further, the OTDR processor 211 may use the I2C interface 219 to output the preprocessed reflection signals λ1" and λ2" to the data processing module 201 of the optical line terminal 110 for signal analysis and processing, and therefore an OTDR test curve about the optical distribution network 130 is obtained.

Specifically, the data processing module 201 may obtain a first OTDR test curve by analyzing the first reflection signal λ1" preprocessed by the OTDR processor 211, and perform optical line analysis and fault locating for the feeder fiber 133 and the distribution fiber 134 of the optical distribution network 130 according to the first OTDR test curve. The data processing module 201 may obtain a second OTDR test curve by analyzing the second reflection signal λ2" preprocessed by the OTDR processor 211, and perform optical line analysis and fault locating accountability and fault sectionalization for the drop fiber 135 of the optical distribution network 130 and the optical network units 120 according to the second OTDR test curve.

Certainly, in alternative embodiments, after obtaining the first OTDR test curve and the second OTDR test curve, the data processing module 201 may further perform comprehensive data processing for the curves to obtain a complete OTDR test curve that can be used to perform fiber analysis and fault diagnosis for the feeder fiber, the distribution fiber, and the drop fiber of the optical distribution network 130.

Alternatively, the OTDR processor 211 may further have an optical line analysis capability. That is, the fiber analysis and fault diagnosis functions of the data processing module 201 may be implemented inside the OTDR processor 211. Therefore, after preprocessing the first reflection signal λ1'' and the second reflection signal λ2", the OTDR processor 211 may directly analyze the first reflection signal λ1" and the second reflection signal λ2" to obtain the first OTDR test curve and the second OTDR test curve respectively, and further perform optical line analysis and fault locating for the feeder fiber 133 and the distribution fiber 134 of the optical distribution network 130 according to the first OTDR test curve and perform line analysis and fault locating accountability and fault sectionalization for the drop fiber 135 of the optical distribution network 130 and the optical network units 120 according to the second OTDR test curve.

In specific implementation, in the OTDR test mode, the OTDR processor 211 of the drive component 210 may start transmission of the first OTDR test signal λ1' first to perform fault locating with respect to the feeder fiber 133 and the distribution fiber 134, and then start transmission of the second OTDR test signal λ2' to perform fault locating accountability and fault sectionalization for the drop fiber 135 and the optical network units 120.

For example, if a same processing module is used in the OTDR processor 211 to process the first OTDR test signal λ1', the first reflection signal λ1", the second OTDR test signal λ2', and the second reflection signal λ2", the OTDR processor 211 may choose to create a connection to the data signal driver 212 and/or the test signal receiver 225, the test signal driver 213 and/or the path selecting unit 214 at different time.

When the transmission of the first OTDR test signal λ1' starts, the OTDR processor 211 creates the connection to the data signal driver 212 and/or the OTDR test signal receiver 225, and disconnects the connection to the test signal driver 213 and/or the path selecting unit 214; therefore, the data signal driver 212 is controlled to drive the data signal transmitter 221 to transmit the first OTDR test signal λ1' and controlled to receive and process the first reflection signal λ1'' received by the test signal receiver 225. When the transmission of the second OTDR test signal λ2' starts, the OTDR processor 211 creates the connection to the test signal driver 213 and/or the path selecting unit 214, and disconnects the connection to the data signal driver 212 and/or the test signal receiver 225; therefore, the test signal driver 213 is controlled to drive the test signal transmitter 224 to transmit the second OTDR test signal λ2' and controlled to receive and process the second reflection signal λ2" received by the data signal receiver 222.

Certainly, because the wavelength of the first OTDR test signal λ1' is different from that of the second OTDR test signal λ2', these two signals do not have mutual interference. In alternative embodiments, when the OTDR processor 211 processes the first OTDR test signal λ1', the first reflection signal λ1", the second OTDR test signal λ2' and the second reflection signal λ2" independently, the OTDR processor 211 may further start transmission of both the first OTDR test signal λ1' and the second OTDR test signal λ2' simultaneously to perform fault locating for the feeder fiber 133 and the distribution fiber 134 and perform fault locating accountability and fault sectionalization for the drop fiber 135 and the optical network units 120 simultaneously.

The optical transceiver module 200 that the OTDR test function is integrated into and is provided in this embodiment uses dual-wavelength test signals, where the first OTDR test signal λ1' and the downstream data signal λ1 share an optical transmission component, the second OTDR test signal λ2' and the upstream data signal λ2 share an optical receiving component. With such configurations, the optical transceiver module 200 can receive the first reflection signal λ1'' and the second reflection signal λ2'' that correspond to the first OTDR test signal λ1' and the second OTDR test signal λ2'. According to the first reflection signal λ1'' and the second reflection signal λ2", a first OTDR test curve and a second OTDR test curve can be obtained, thereby implementing fault locating for the feeder fiber 133 and the distribution fiber 134 on the optical distribution network 130 and implementing line analysis, fault locating accountability and fault sectionalization for the drop fiber 135 on the optical distribution network 130 and the optical network units 120 without using auxiliary test approaches (for example, adding an optical reflector on the drop fiber). Therefore, the optical transceiver module 200 provided in this application can perform fault detection and diagnostic analysis for an optical network simply and efficiently, which not only can reduce OTDR test costs effectively but also can reduce construction difficulty.

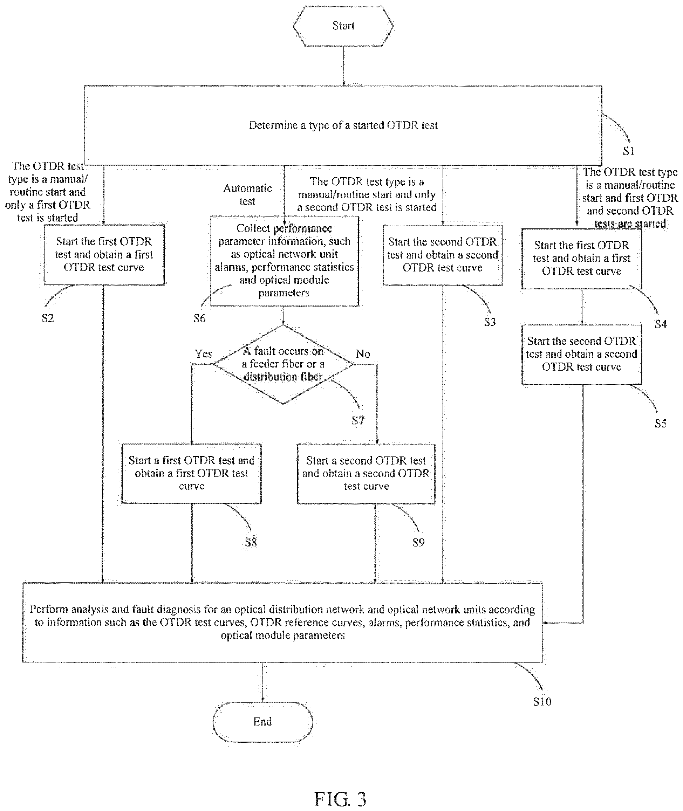

Based on the foregoing optical transceiver module 200, this application further provides a fiber detection method of a passive optical network system. Refer to FIG. 3, which is a schematic flowchart of a fiber detection method according to an embodiment of this application. The fiber detection method includes the following steps:
Step S1: Receive an OTDR test start command, and determine a type of a started OTDR test according to the OTDR test start command. If the OTDR test type is a manual start or a routine start and only an OTDR test based on a first wavelength λ1 (that is, a first OTDR test) is started,
step S2 is performed; if the OTDR test type is a manual start or a routine start and only an OTDR test based on a second wavelength λ2 (that is, a second OTDR test) is started, step S3 is performed; if the OTDR test type is a manual start or a routine start and both the first OTDR test and the second OTDR test are started simultaneously, step S4 is performed; if the OTDR test type is an automatic test, step S6 is performed.

The manual start may be: an operator inputs the test start command on a command line interface of an optical line terminal 110 or on an operating interface of a network management system. The routine start may be: the operator sets a test start period in the optical line terminal 110 or the network management system; the optical line terminal 110 is triggered automatically to start an OTDR test according to the test period. The test may also be triggered by the optical line terminal 110 or the network management system based on a condition such as alarm and/or performance statistics.

Step S2: The optical transceiver module 200 of the optical line terminal 110 starts the first OTDR test and obtains a first OTDR test curve. Upon completion of the test, step S10 is performed.

Step S3: The optical transceiver module of the optical line terminal 110 starts the second OTDR test and obtains a second OTDR test curve. Upon completion of the test, step S10 is performed.

Step S4: The optical transceiver module of the optical line terminal 110 starts the first OTDR test and obtains the first OTDR test curve. Upon completion of the test, step S5 is performed.

Step S5: The optical transceiver module of the optical line terminal 110 starts the second OTDR test and obtains the second OTDR test curve. Upon completion of the test, step S10 is performed. In a specific embodiment, step S4 and step S5 may be performed in another order. That is, the second OTDR test may be started first and the first OTDR test is started later.

Step S6: The optical line terminal 110 or the network management system collects information such as alarms, performance statistics and optical module parameters of the optical line terminal 110 and/or optical network units 120, where the alarm information may be transport convergence (Transport Convergence, TC) layer alarms and/or optical network terminal management and control interface (ONT Management and Control Interface, OMCI) alarms, such as a loss of signal (LOS, Loss of Signal) alarm. The performance statistics may include bit interleaved parity (Bit Interleaved Parity, BIP) errors and the like, and the optical module parameters may include transmit optical power, receive optical power, polarization current, working voltage, working temperature, and the like.

Step S7: The optical line terminal 110 or the network management system determines whether a fault occurs on a feeder fiber 133 or distribution fibers 134 of an optical distribution network 130. If the fault occurs on the feeder fiber 133 or the distribution fibers 134, step S8 is performed; otherwise, step S9 is performed.

Specifically, in step S7, the optical line terminal 110 or the network management system may determine, according to a percentage of the optical network units 120 in which an alarm and a performance parameter deterioration occur, whether the fault occurs on the feeder fiber 133 or the distribution fibers 134 of the optical distribution network 130. For example, if an alarm or performance deterioration occurs simultaneously on all optical network units 120 in a system, it may be determined that the fault occurs on the feeder fiber 133; if the alarm or performance deterioration occurs simultaneously on multiple optical network units 120 connected to a distribution fiber 134, it may be determined that the fault occurs on the distribution fiber 134.

Step S8: The optical transceiver module of the optical line terminal 110 starts the first OTDR test and obtains the first OTDR test curve. Upon completion of the test, step S10 is performed. Specifically, using the optical transceiver module 200 shown in FIG. 2 as an example, the optical line terminal 110 may send a first OTDR test start command to the OTDR processor 211 of the optical transceiver module 200 by using an I2C interface (or another control signal cable) 219.

Before receiving the OTDR test start command, the OTDR processor 211 is in a standby state or a low power consumption state. After receiving the OTDR test start command, the OTDR processor 211 may provide first OTDR test data for the data signal driver 212. The data signal driver 212 further modulates the first OTDR test data to an optical signal of the first wavelength λ1 (that is, a downstream data wavelength λ1) that is transmitted by the data signal transmitter 221, thereby forming and outputting the first OTDR test signal λ1'. The first OTDR test signal λ1' transmitted by the data signal transmitter 221 is transmitted to the fiber adapter 230 through the filtering component 223, and output to the optical distribution network 130.

The first OTDR test signal λ1' is reflected and/or scattered when transmitted in the optical distribution network 130 to form a first reflection signal λ1" that is returned along an original way. The first reflection signal λ1" is input from the fiber adapter 230 and is transmitted to the test signal receiver 225 through the filtering component 223. The test signal receiver 225 further converts the first reflection signal λ1" into an electric signal and feeds back the electric signal to the OTDR processor 211. The OTDR processor 211 preprocesses the first reflection signal λ1", for example, amplifies the signal or performs sampling and digital processing. The preprocessed signal may be further provided for another functional module such as the data processing module 201 of the optical line terminal 110, so that the signal can be analyzed to obtain the first OTDR test curve.

Step S9: The optical transceiver module of the optical line terminal 110 starts the second OTDR test and obtains the second OTDR test curve. Upon completion of the test, step S10 is performed. Specifically, using the optical transceiver module 200 shown in FIG. 2 as an example, the optical line terminal 110 may suspend allocation of an upstream data timeslot, and therefore the optical network unit 120 stops sending upstream data and sends a second OTDR test start command to the OTDR processor 211 of the optical transceiver module 200 by using the I2C interface (or another control signal cable) 219. After receiving the second OTDR test start command, the OTDR processor 211 may control the path selecting unit 214 to create a transmission path between the input end 207 and the data signal output end 208. In addition, the OTDR processor 211 further provides the test signal driver 213 with second OTDR test data. The test signal driver 213 further modulates the second OTDR test data to an optical signal of the second wavelength λ2 (that is, an upstream data wavelength λ2) that is transmitted by the test signal transmitter 224, thereby forming and outputting the second OTDR test signal λ2'. The second OTDR test signal λ2' transmitted by the test signal transmitter 224 is transmitted to the fiber adapter 230 through the filtering component 223, and output to the optical distribution network 130.

The second OTDR test signal λ2' is reflected and/or scattered when transmitted in the optical distribution network 130 to form a second reflection signal λ2" that is returned along an original way. The second reflection signal λ2" is input from the fiber adapter 230 and is transmitted to the data signal receiver 222 through the filtering component 223. The data signal receiver 222 further converts the second reflection signal into an electric signal and provides the electric signal for the OTDR processor 211 by using the path selecting unit 214. The OTDR processor 211 preprocesses the second reflection signal λ2", for example, amplifies the signal or performs sampling and digital processing. The preprocessed signal may be further provided for another functional module such as the data processing module 201 of the optical line terminal 110, so that the signal can be analyzed to obtain the second OTDR test curve.

S10. Perform analysis and fault diagnosis for the optical distribution network and optical network units according to information such as the OTDR test curves, OTDR reference curves, alarms, performance statistics, and optical module parameters.

Specifically, according to the information such as the alarms, performance statistics, and optical module parameters, the optical line terminal 110 or the network management system may determine whether a fault occurs in the system, and compare the first OTDR test curve with a first OTDR reference curve to determine whether deterioration or a fault occurs on the feeder fiber 133 and the distribution fiber 134.

If the system runs normally and the first OTDR test curve is consistent with the first OTDR reference curve, it may be determined that the feeder fiber 133 and the distribution fiber 134 are normal.

If the system runs normally but the first OTDR test curve is inconsistent with the first OTDR reference curve, it may be determined that the feeder fiber 133 and/or the distribution fiber 134 is deteriorated, and a specific location of the deterioration may be determined according to a location of inconsistency between the first OTDR test curve and the first OTDR reference curve. If the system runs abnormally but the first OTDR test curve is consistent with the first OTDR reference curve, it may be determined that the feeder fiber 133 and the distribution fiber 134 are normal, and the fault may occur on the drop fiber 135 or the optical network unit 120, and the details may be further determined by analyzing the second OTDR test curve; otherwise, it may be determined that a deterioration fault occurs on the feeder fiber 133 and/or the distribution fiber 134, and the specific location in which the fault occurs may be determined according to a location of inconsistency between the first OTDR test curve and the first OTDR reference curve. The optical line terminal 110 or the network management system may further compare the second OTDR test curve with a second OTDR reference curve to determine whether deterioration or a fault occurs on the drop fiber 135 and the optical network unit 120.

If the system runs normally and the second OTDR test curve obtained in the test is consistent with the second OTDR reference curve, it may be determined that the drop fiber 135 and the optical network unit 120 are normal.

If the system runs normally but a reflection peak disappears or is lower when the second OTDR test curve is compared with the reference OTDR test curve, it may be determined according to the reflection peak that deterioration occurs on a drop fiber 135 corresponding to the reflection peak.

If the system runs abnormally and a reflection peak disappears or is lower when the second OTDR test curve is compared with the reference OTDR test curve, it may be determined according to the reflection peak that a fault occurs on a drop fiber 135 corresponding to the reflection peak.

If the system runs abnormally but the second OTDR test curve is consistent with the second OTDR reference curve, it may be determined that a fault occurs on the optical network unit 120. Certainly, in a specific embodiment, after the optical transceiver module 200 finishes step S8 that deals with fault locating for the feeder fiber 133 or the distribution fiber 134, step S9 may be further performed to determine whether a fault also occurs on the drop fiber 135 or the optical network unit 120.

Optionally, at the time of a manual start or a routine start or when automatic-test conditions are fulfilled, the first OTDR test and the second OTDR test may be started simultaneously or at different time to obtain the first OTDR test curve and the second OTDR test curve respectively, and the information such as the alarms, performance statistics and optical module parameters is collected. The optical distribution network 130 and the optical network unit 120 are analyzed and diagnosed according to the information such as the first OTDR test curve, the first OTDR reference curve, the second OTDR test curve, the second OTDR reference curve, the alarms, the performance statistics, and the optical module parameters.

Optionally, in a specific embodiment, after the first OTDR test curve and the second OTDR test curve are obtained, comprehensive data processing may be further performed for the curves to obtain a complete OTDR test curve that can be used to perform fiber analysis and fault diagnosis for the feeder fiber, the distribution fiber, and the drop fiber of the optical distribution network 130, and the optical distribution network 130 and the optical network unit 120 are analyzed and diagnosed according to the information such as the complete OTDR test curve, the OTDR reference curve, the alarms, the performance statistics, and the optical module parameters.

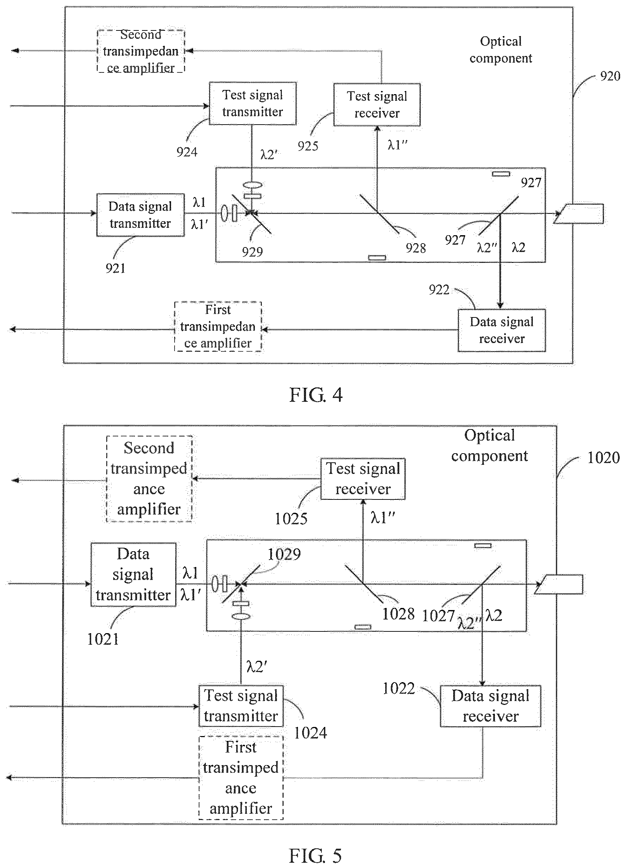

The optical transceiver module 200 provided in this application may have another structure except the structure shown in FIG. 2. With reference to FIG. 4 to FIG. 10, the following describes structures of the optical transceiver module 200 provided in this application in alternative implementation manners.

Refer to FIG. 4, which is a schematic structural diagram of an optical component 920 of an optical transceiver module according to another embodiment of this application. A structure of the optical component 920 is similar to that of the optical component 220 of the optical transceiver module 200 shown in FIG. 2, and a main difference is that: in the optical component 220 shown in FIG. 2, the test signal transmitter 224 is coupled to the reflective optical path of the second wavelength division multiplexing filter 228, and the test signal receiver 225 is coupled to the reflective optical path of the optical splitter filter 229; however, in the optical component 920 shown in FIG. 4, all filters 927, 928, and 929 are wavelength division multiplexing filters, a data signal receiver 922 is coupled to a reflective optical path of a first wavelength division multiplexing filter 927, a test signal receiver 925 is coupled to a reflective optical path of a second wavelength division multiplexing filter 928, and a test signal transmitter 924 is coupled to a reflective optical path of a third wavelength division multiplexing filter 929.

The first wavelength division multiplexing filter 927 can transmit 100% of an optical signal that carried by a first wavelength λ1, and reflect x% and transmit (1-x)% of an optical signal that carried by a second wavelength λ2; the second wavelength division multiplexing filter 928 can reflect x% and transmit (1-x)% of the optical signal that has the first wavelength λ1, and transmit 100% of the optical signal that has the second wavelength λ2; the third wavelength division multiplexing filter 929 can transmit 100% of the optical signal that has the first wavelength λ1, and reflect 100% of the optical signal that has the second wavelength λ2.

With the foregoing settings, the test signal transmitter 924 may be arranged in a position contiguous to the data signal transmitter 921, and the test signal receiver 925 may be arranged in a position contiguous to the data signal receiver 922.

In addition, in the optical component 920 shown in FIG. 4, the test signal transmitter 924 and the test signal receiver 925 are located on a same side of a main optical path of the optical component 920, and the data signal receiver 922 is located on the other side (opposite side) of the main optical path. That is, the data signal receiver 922 is located on a different side of the main optical path from the test signal transmitter 924 and the test signal receiver 925.

Refer to FIG. 5, which is a schematic structural diagram of an optical component 1020 of an optical transceiver module according to another embodiment of this application. Similar to the optical component 420 shown in FIG. 4, in the optical component 1020, a test signal transmitter 1024 is also coupled to a reflective optical path of a third wavelength division multiplexing filter 1029, and a test signal receiver 1025 is also coupled to a reflective optical path of a second wavelength division multiplexing filter 1028, so that the test signal transmitter 1024 and the test signal receiver 1025 are arranged in positions contiguous to a data signal transmitter 1021 and a data signal receiver 1022 respectively. However, a main difference between the optical component 1020 shown in FIG. 5 and the optical component 920 shown in FIG. 4 is: in the optical component 1020, sloping directions of a first wavelength division multiplexing filter 1027 and the second wavelength division multiplexing filter 1028 are set, so that the test signal transmitter 1024 and the data signal receiver 1022 are located on a same side of a main optical path of the optical component 1020, and the test signal receiver 1025 is located on the other side (opposite side) of the main optical path. That is, the data signal receiver 1025 is located on a different side of the main optical path from the test signal transmitter 1024 and the test signal receiver 1022.

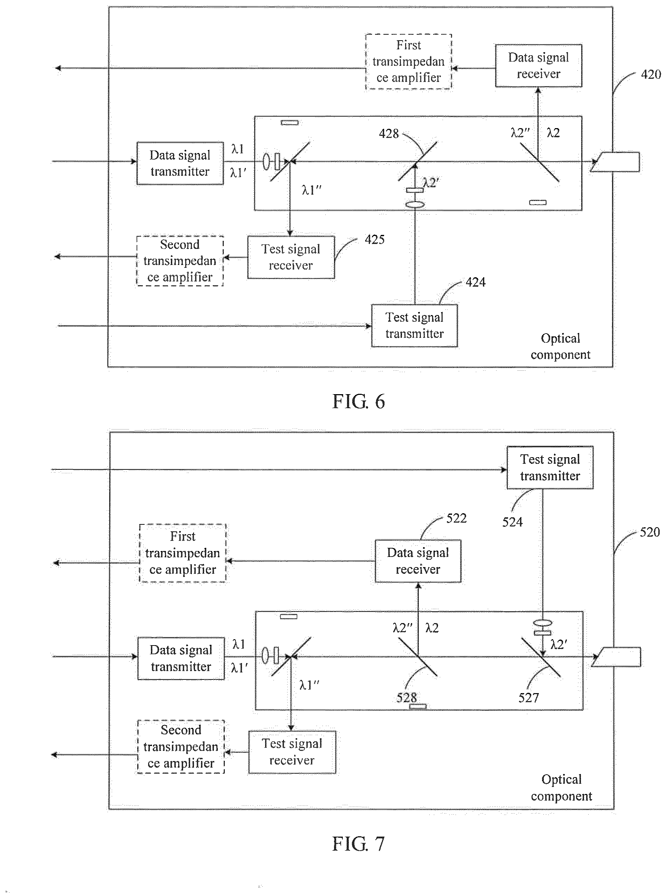

Refer to FIG. 6, which is a schematic structural diagram of an optical component 420 of an optical transceiver module according to another embodiment of this application. A structure of the optical component 420 is similar to that of the optical component 220 of the optical transceiver module 200 shown in FIG. 2, and a main difference is that: in the optical component 220 shown in FIG. 2, the test signal transmitter 224 and the test signal receiver 225 are located on different sides of the main optical path of the optical component 220; however, in the optical component 420, a sloping direction of a second wavelength division multiplexing filter 428 is set, so that a test signal transmitter 424 and a test signal receiver 425 may be located on a same side of a main optical path of the optical component 420.

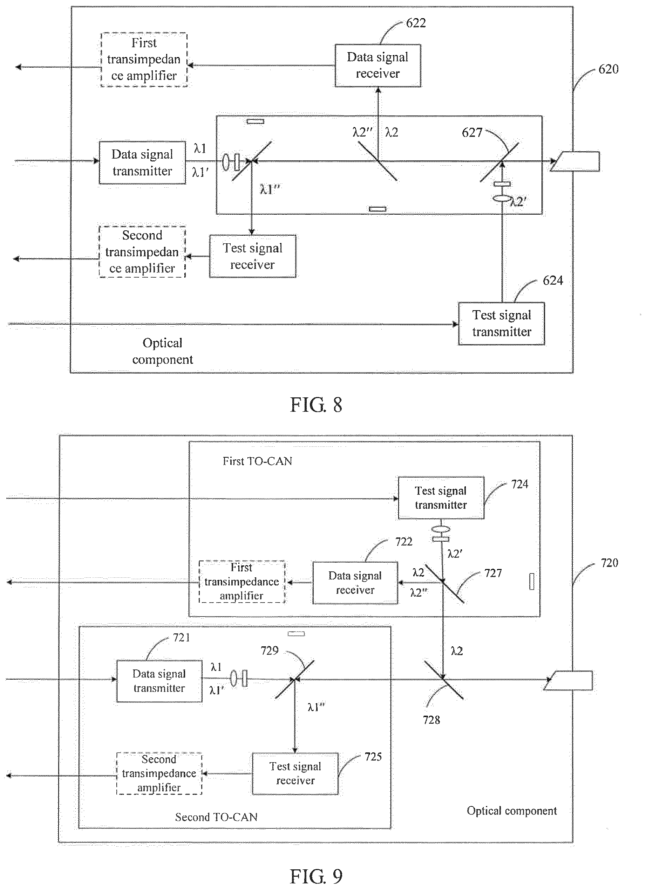

Refer to FIG. 7, which is a schematic structural diagram of an optical component 520 of an optical transceiver module according to another embodiment of this application. A structure of the optical component 520 is similar to that of the optical component 220 of the optical transceiver module 200 shown in FIG. 2, and a main difference is that: in the optical component 220 shown in FIG. 2, the test signal transmitter 224 is located on the reflective optical path of the second wavelength division multiplexing filter 228, and the data signal receiver 222 is located on the reflective optical path of the first wavelength division multiplexing filter 227; however, in the optical component 520, a test signal transmitter 524 is located on a reflective optical path of a first wavelength division multiplexing filter 527, and a data signal receiver 522 is located on a reflective optical path of a second wavelength division multiplexing filter 528. In addition, in this embodiment, to ensure performance of the optical component 520, the first wavelength division multiplexing filter 527 may be adjusted to transmit approximately 90% correspondingly. Refer to FIG. 8, which is a schematic structural diagram of an optical component 620 of an optical transceiver module according to another embodiment of this application. A structure of the optical component 620 is similar to that of the optical component 520 shown in FIG. 7, and a main difference is that: in the optical component 520 shown in FIG. 7, the test signal transmitter 524 and the data signal receiver 522 are located on a same side of a main optical path of the optical component 520; however, in the optical component 620, a sloping direction of a first wavelength division multiplexing filter 627 is set, so that a test signal transmitter 624 and a data signal receiver 622 may be located on different sides of a main optical path of the optical component 620.

Alternatively, in the optical components 520 and 620 shown in FIG. 7 and FIG. 8, the first wavelength division multiplexing filters 527 and 627 may also be replaced by optical splitter filters. Specifically, when the first wavelength division multiplexing filters 527 and 627 are replaced by optical splitter filters, the optical splitter filters can transmit approximately 90% and reflect approximately 10% of both an optical signal that carried by a first wavelength λ1 and an optical signal that carried by a second wavelength λ2.

Refer to FIG. 9, which is a schematic structural diagram of an optical component 720 of an optical transceiver module according to another embodiment of this application. A structure of the optical component 720 is similar to that of the optical component 220 of the optical transceiver module 200 shown in FIG. 2, and a main difference is that: in the optical component 720, a wavelength division multiplexing filter 728 is located between an optical splitter filter 729 and a fiber adapter 730; the first wavelength division multiplexing filter 227 shown in FIG. 2 is replaced by another optical splitter filter 727, and the optical splitter filter 727 is located on a reflective optical path of the wavelength division multiplexing filter 728, and the optical splitter filter 727 can transmit y% and reflect (100-y)% of an optical signal that carried by a second wavelength λ2, where y may be 10. In addition, in the optical component 720, a test signal transmitter 724 is located on a transmissive optical path of the optical splitter filter 727, and a data signal receiver 722 is located on a reflective optical path of the optical splitter filter 727. Alternatively, the test signal transmitter 724 may also be located on the reflective optical path of the optical splitter filter 727, and the data signal receiver 722 may be located on the transmissive optical path of the optical splitter filter 727.

Optionally, in the optical component 720 shown in FIG. 9, the test signal transmitter 724, the data signal receiver 722, the optical splitter filter 727, and a first transimpedance amplifier may be packaged by using a TO-CAN to form a first TO-CAN module; a data signal transmitter 721, a test signal receiver 725, the optical splitter filter 729, and a second transimpedance amplifier may also be packaged by using a TO-CAN to form a second TO-CAN module.

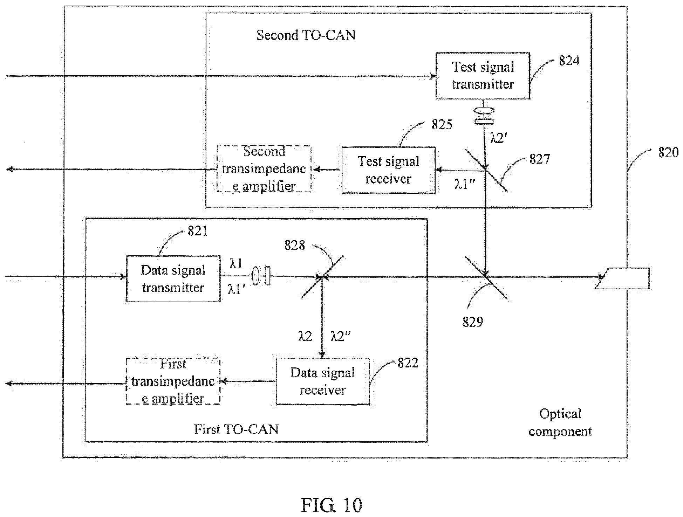

Refer to FIG. 10, which is a schematic structural diagram of an optical component 820 of an optical transceiver module according to another embodiment of this application. A structure of the optical component 820 is similar to that of the optical component 220 of the optical transceiver module 200 shown in FIG. 2, and a main difference is that locations of filtering components and a signal transmitter or receiver of the optical component 820 are different from those of the optical component 220 shown in FIG. 2.

Specifically, the filtering components of the optical component 820 include an optical splitter filter 829, a first wavelength division multiplexing filter 827, and a second wavelength division multiplexing filter 828. The optical splitter filter 829 is located on a main optical path in an extension direction of a fiber adapter 830. The optical splitter filter 829 can transmit approximately x% and reflect approximately (100-x)% of an optical signal that carried by a first wavelength λ1, and transmit approximately y% and reflect approximately (100-y)% of an optical signal that carried by a second wavelength λ2, where x and y may be 90. In addition, a transmissive optical path of the optical splitter filter 829 is consistent with the main optical path, and its reflective optical path is perpendicular to the main optical path.

The first wavelength division multiplexing filter 827 is located on the reflective optical path of the optical splitter filter 829, and can reflect approximately 100% of the optical signal that carried by the first wavelength λ1 and transmit approximately 100% of the optical signal that carried by the second wavelength λ2. In addition, a test signal receiver 825 is located on a reflective optical path of the first wavelength division multiplexing filter 827, and a test signal transmitter 824 is located on a transmissive optical path of the first wavelength division multiplexing filter 827. Alternatively, the test signal receiver 825 may also be located on the transmissive optical path of the first wavelength division multiplexing filter 827, and the test signal transmitter 824 is located on the reflective optical path of the first wavelength division multiplexing filter 827.

The second wavelength division multiplexing filter 828 is located on the transmissive optical path of the optical splitter filter 829, and can transmit approximately 100% of the optical signal that carried by the first wavelength λ1 and reflect approximately 100% of the optical signal that carried by the second wavelength λ2. In addition, a data signal receiver 822 is located on a reflective optical path of the second wavelength division multiplexing filter 828, and a data signal transmitter 821 is located on a transmissive optical path of the second wavelength division multiplexing filter 828. Alternatively, the data signal receiver 822 may also be located on the transmissive optical path of the second wavelength division multiplexing filter 828, and the data signal transmitter 821 is located on the reflective optical path of the second wavelength division multiplexing filter 828.

Optionally, in the optical component 820 shown in FIG. 10, the first wavelength division multiplexing filter 827, the test signal transmitter 824, the test signal receiver 825, and a second transimpedance amplifier may be packaged by using a same TO-CAN to form a TO-CAN used for receiving and transmitting a test signal. The second wavelength division multiplexing filter 828, the data signal transmitter 821, the data signal receiver 822, and a first transimpedance amplifier may be packaged by using another TO-CAN to form a TO-CAN used for receiving and transmitting a data signal.

For functions of each function unit inside the optical components 420-1020 in FIG. 4 to FIG. 10 and processes of performing data receiving and transmission and OTDR tests when they are applied to the passive optical network system 100 shown in FIG. 1, reference may be made to related description about the optical transceiver module 200 in FIG. 2 and FIG. 3, and details will not be repeated herein.

The foregoing descriptions are merely preferable specific embodiments of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. An optical transceiver module (200), comprising an optical component (220) and a drive component (210) connected to the optical component (220), **characterized in that** the optical component (220) comprises:
a data signal transmitter (221), configured to transmit a first data signal that is carried by a first wavelength, and transmit a first test signal that has the first wavelength to an optical network under control of the drive component, wherein the first data signal is a downstream data signal, wherein the first test signal is a downstream test signal;
a test signal receiver (225), configured to receive a first reflection signal generated as a result of reflection of the first test signal that occurs in the optical network;
a test signal transmitter (224), configured to transmit a second test signal that is carried by a second wavelength which is an upstream data signal wavelength to the optical network under control of the drive component, wherein the second test signal is an upstream test signal; and
a data signal receiver (222), configured to receive a second data signal that has the second wavelength and receive a second reflection signal generated as a result of reflection of the second test signal that occurs in the optical network, wherein second data signal is an upstream data signal.

2. The optical transceiver module according to claim 1, wherein the drive component (210) comprises a test processor (211), a data signal driver (212), and a test signal driver (213);
the test processor (211) is configured to start a test mode and preprocess the first reflection signal and the second reflection signal that are returned by the test signal receiver and the data signal receiver; and
the test signal driver (213) and the data signal driver (212) are configured to drive, under control of the test processor, the data signal transmitter and the test signal transmitter respectively to transmit the first test signal and the second test signal.

3. The optical transceiver module according to claim 1, wherein the drive component comprises a test processor and a data signal driver;
the test processor is configured to start a test mode and preprocess the first reflection signal and the second reflection signal that are returned by the test signal receiver and the data signal receiver; and
the data signal driver is configured to drive, under control of the test processor, the data signal transmitter to transmit the first test signal, and the test processor is further configured to drive the test signal transmitter to transmit the second test signal.

4. The optical transceiver module according to claim 2 or 3, wherein the data signal driver is further configured to: before the optical transceiver module enters the test mode, drive, under control of the test processor, the data signal transmitter to transmit an instruction to a peer device, wherein the instruction is used for suspending the second data signal from being sent.

5. The optical transceiver module according to claim 4, wherein the drive component (210) further comprises a path selecting unit (214), and the path selecting unit (214) is configured to: forward, in a normal communication mode, a second output signal received by the data signal receiver to a data processing module of an optical line terminal, and provide, in the test mode, the test processor with the second reflection signal received by the data signal receiver.

6. The optical transceiver module according to claim 1, wherein the optical component further comprises a fiber adapter and a filtering component, and the data signal transmitter, the data signal receiver, the test signal transmitter, and the test signal receiver are coupled to the fiber adapter by using the filtering component; and
the filtering component is configured to: provide the fiber adapter with the first data signal and the first test signal that are transmitted by the data signal transmitter as well as the second test signal transmitted by the test signal transmitter, and output them to the optical network; the filtering component is further configured to: provide the data signal receiver with the second data signal and the second reflection signal that are input from the fiber adapter, and provide the test signal receiver with the first reflection signal input from the fiber adapter.

7. The optical transceiver module according to claim 6, wherein the filtering component comprises a first wavelength division multiplexing filter, a second wavelength division multiplexing filter, and an optical splitter filter that are arranged sequentially on a main optical path in a direction extending from the fiber adapter;
the first wavelength division multiplexing filter is configured to: transmit an optical signal that has the first wavelength, and partly reflect and partly transmit an optical signal that has the second wavelength;
the second wavelength division multiplexing filter is configured to: transmit the optical signal that has the first wavelength, and reflect the optical signal that has the second wavelength; and
the optical splitter filter is configured to partly reflect and partly transmit the optical signal that has the first wavelength.

8. The optical transceiver module according to claim 7, wherein the data signal receiver is coupled to a reflective optical path of the first wavelength division multiplexing filter, and the test signal transmitter is coupled to a reflective optical path of the second wavelength division multiplexing filter, the data signal transmitter is coupled to a transmissive optical path of the optical splitter filter, and the test signal receiver is coupled to a reflective optical path of the optical splitter filter.

9. The optical transceiver module according to claim 7, wherein the test signal transmitter is coupled to a reflective optical path of the first wavelength division multiplexing filter, and the data signal receiver is coupled to a reflective optical path of the second wavelength division multiplexing filter, the data signal transmitter is coupled to a transmissive optical path of the optical splitter filter, and the test signal receiver is coupled to a reflective optical path of the optical splitter filter.

10. The optical transceiver module according to claim 6, wherein the filtering component comprises a first wavelength division multiplexing filter, a second wavelength division multiplexing filter, and a third wavelength division multiplexing filter that are arranged sequentially on a main optical path in a direction extending from the fiber adapter;
the first wavelength division multiplexing filter is configured to: transmit an optical signal that has the first wavelength, and partly reflect and partly transmit an optical signal that has the second wavelength;
the second wavelength division multiplexing filter is configured to: partly reflect and partly transmit the optical signal that has the first wavelength, and transmit the optical signal that has the second wavelength; and
the third wavelength division multiplexing filter is configured to: transmit the optical signal that has the first wavelength, and reflect the optical signal that has the second wavelength.

11. The optical transceiver module according to claim 10, wherein the data signal receiver is coupled to a reflective optical path of the first wavelength division multiplexing filter, the test signal receiver is coupled to a reflective optical path of the second wavelength division multiplexing filter, the data signal transmitter is coupled to a transmissive optical path of the third wavelength division multiplexing filter, and the test signal transmitter is coupled to a reflective optical path of the third wavelength division multiplexing filter.

12. The optical transceiver module according to claim 6, wherein the filtering component comprises a first optical splitter filter, a second optical splitter filter, and a wavelength division multiplexing filter;
the wavelength division multiplexing filter is arranged on a main optical path that extends from the fiber adapter, and is configured to transmit an optical signal that has the first wavelength and reflect an optical signal that has the second wavelength;
the first optical splitter filter is arranged on a reflective optical path of the wavelength division multiplexing filter, and is configured to partly reflect and partly transmit the optical signal that has the first wavelength; and
the second optical splitter filter is arranged on a transmissive optical path of the wavelength division multiplexing filter, and is configured to partly reflect and partly transmit the optical signal that has the second wavelength.

13. The optical transceiver module according to claim 12, wherein the test signal transmitter and the data signal receiver are respectively coupled to a transmissive optical path and a reflective optical path of the first optical splitter filter, and packaged with the first optical splitter filter into a first TO-CAN module; and
the data signal transmitter and the test signal receiver are respectively coupled to a transmissive optical path and a reflective optical path of the second optical splitter filter, and packaged with the second optical splitter filter into a second TO-CAN module.

14. The optical transceiver module according to claim 6, wherein the filtering component comprises an optical splitter filter, a first wavelength division multiplexing filter, and a second wavelength division multiplexing filter;
the optical splitter filter is arranged on a main optical path that extends from the fiber adapter, and is configured to partly transmit and partly reflect an optical signal that has the first wavelength and partly transmit and partly reflect an optical signal that has the second wavelength;
the first wavelength division multiplexing filter is arranged on a reflective optical path of the optical splitter filter, and is configured to transmit the optical signal that has the second wavelength and reflect the optical signal that has the first wavelength; and
the second wavelength division multiplexing filter is arranged on a transmissive optical path of the optical splitter filter, and is configured to transmit the optical signal that has the first wavelength and reflect the optical signal that has the second wavelength.

15. The optical transceiver module according to claim 14, wherein the test signal transmitter and the test signal receiver are respectively coupled to a transmissive optical path and a reflective optical path of the first wavelength division multiplexing filter, and packaged with the first wavelength division multiplexing filter into a first TO-CAN module; and
the data signal transmitter and the data signal receiver are respectively coupled to a transmissive optical path and a reflective optical path of the second wavelength division multiplexing filter, and packaged with the second wavelength division multiplexing filter into a second TO-CAN module.

16. A passive optical network system (100), comprising an optical line terminal (110), multiple optical network units (120) and an optical distribution network (130), wherein the optical line terminal (110) is connected to the multiple optical network units (120) through the optical distribution network(130), **characterized in that** the optical line terminal and/or the optical network units comprise an optical transceiver module that a test function is integrated into, and the optical transceiver module (300) is the optical transceiver module (200) according to any one of claims 1 to 15.

17. An optical line terminal, comprising a data processing module (201) and an optical transceiver module (200), **characterized in that** the optical transceiver module (200) is the optical transceiver module according to any one of claims 1 to 15, the data processing module (201) is configured to provide a first data signal for the optical transceiver module for transmission and perform data processing for a second data signal received by the optical transceiver module, and the data processing module (201) is further configured to analyze an optical line according to a first reflection signal and a second reflection signal that are received by the optical transceiver module.

## Patentansprüche

1. Optisches Sendeempfängermodul (200), umfassend eine optische Komponente (220) und eine Ansteuerkomponente (210), die mit der optischen Komponente (220) verbunden ist, **dadurch gekennzeichnet, dass** die optische Komponente (220) Folgendes umfasst:
einen Datensignalsender (221), der so konfiguriert ist, dass er ein erstes Datensignal sendet, das durch eine erste Wellenlänge befördert wird, und ein erstes Testsignal, das die erste Wellenlänge aufweist, unter der Kontrolle der Ansteuerkomponente an ein optisches Netzwerk sendet, wobei das erste Datensignal ein Downstream-Datensignal ist, wobei das erste Testsignal ein Downstream-Testsignal ist;
einen Testsignalempfänger (225), der so konfiguriert ist, dass er ein erstes Reflexionssignal empfängt, das infolge von Reflexion des ersten Testsignals erzeugt wird, die im optischen Netzwerk auftritt;
einen Testsignalsender (224), der so konfiguriert ist, dass er ein zweites Testsignal, das durch eine zweite Wellenlänge befördert wird, die eine Upstream-Datensignalwellenlänge ist, unter der Kontrolle der Ansteuerkomponente an das optische Netzwerk sendet, wobei das zweite Testsignal ein Upstream-Testsignal ist; und
einen Datensignalempfänger (222), der so konfiguriert ist, dass er ein zweites Datensignal empfängt, das die zweite Wellenlänge aufweist, und ein zweites Reflexionssignal empfängt, das infolge von Reflexion des zweiten Testsignals erzeugt wird, die im optischen Netzwerk auftritt, wobei das zweite Datensignal ein Upstream-Datensignal ist.

2. Optisches Sendeempfängermodul nach Anspruch 1, wobei die Ansteuerkomponente (210) einen Testprozessor (211), einen Datensignaltreiber (212) und einen Testsignaltreiber (213) umfasst;
wobei der Testprozessor (211) so konfiguriert ist, dass er einen Testmodus startet und das erste Reflexionssignal und das zweite Reflexionssignal, die durch den Testsignalempfänger und den Datensignalempfänger zurückgesendet werden, vorverarbeitet; und
der Testsignaltreiber (213) und der Datensignaltreiber (212) so konfiguriert sind, dass sie unter der Kontrolle des Testprozessors den Datensignalsender und den Testsignalsender zum Senden des ersten Testsignals bzw. des zweiten Testsignals ansteuern.

3. Optisches Sendeempfängermodul nach Anspruch 1, wobei die Ansteuerkomponente einen Testprozessor und einen Datensignaltreiber umfasst;
wobei der Testprozessor so konfiguriert ist, dass er einen Testmodus startet und das erste Reflexionssignal und das zweite Reflexionssignal, die durch den Testsignalempfänger und den Datensignalempfänger zurückgesendet werden, vorverarbeitet; und
der Datensignaltreiber so konfiguriert ist, dass er unter der Kontrolle des Testprozessors den Datensignalsender zum Senden des ersten Testsignals ansteuert, und der Testprozessor ferner so konfiguriert ist, dass er den Testsignalsender zum Senden des zweiten Testsignals ansteuert.

4. Optisches Sendeempfängermodul nach Anspruch 2 oder 3, wobei der Datensignaltreiber ferner konfiguriert ist zum: Ansteuern des Datensignalsenders unter
der Kontrolle des Testprozessors zum Senden einer Anweisung an eine Partnervorrichtung, bevor das optische Sendeempfängermodul in den Testmodus eintritt, wobei die Anweisung zum Aufheben des Sendens des zweiten Datensignals verwendet wird.

5. Optisches Sendeempfängermodul nach Anspruch 4, wobei die Ansteuerkomponente (210) ferner eine Pfadauswahleinheit (214) umfasst, und die Pfadauswahleinheit (214) konfiguriert ist zum: Weiterleiten in einem normalen Kommunikationsmodus eines zweiten Ausgangssignals, das durch den Datensignalempfänger empfangen wird, an ein Datenverarbeitungsmodul eines optischen Leitungsendgeräts und Versehen im Testmodus des Testprozessors mit dem zweiten Reflexionssignal, das durch den Datensignalempfänger empfangen wird.

6. Optisches Sendeempfängermodul nach Anspruch 1, wobei die optische Komponente ferner einen Faseradapter und eine Filterkomponente umfasst, und der Datensignalsender, der Datensignalempfänger, der Testsignalsender und der Testsignalempfänger durch Verwenden der Filterkomponente mit dem Faseradapter gekoppelt sind; und
wobei die Filterkomponente konfiguriert ist zum: Versehen des Filteradapters mit dem ersten Datensignal und dem ersten Testsignal, die durch den Datensignalsender gesendet werden, sowie dem zweiten Testsignal, das durch den Testsignalsender gesendet wird, und Ausgeben derselben an das optische Netzwerk; wobei die Filterkomponente ferner konfiguriert ist zum: Versehen des Datensignalempfängers mit dem zweiten Datensignal und dem zweiten Reflexionssignal, die vom Faseradapter eingegeben werden, und Versehen des Testsignalempfängers mit dem ersten Reflexionssignal, das vom Faseradapter eingegeben wird.

7. Optisches Sendeempfängermodul nach Anspruch 6, wobei die Filterkomponente ein erstes Wellenlängenmultiplexfilter, ein zweites Wellenlängenmultiplexfilter und ein optisches Splitterfilter umfasst, die auf einem optischen Hauptpfad in einer Richtung, die sich vom Faseradapter erstreckt, der Reihe nach angeordnet sind;
wobei das erste Wellenlängenmultiplexfilter konfiguriert ist zum: Durchlassen eines optischen Signals, das die erste Wellenlänge aufweist, und teilweisen Reflektieren und teilweisen Durchlassen eines optischen Signals, das die zweite Wellenlänge aufweist; das zweite Wellenlängenmultiplexfilter konfiguriert ist zum: Durchlassen des optischen Signals, das die erste Wellenlänge aufweist, und Reflektieren des optischen Signals, das die zweite Wellenlänge aufweist; und
das optische Splitterfilter so konfiguriert ist, dass es das optische Signal, das die erste Wellenlänge aufweist, teilweise reflektiert und teilweise durchlässt.

8. Optisches Sendeempfängermodul nach Anspruch 7, wobei der Datensignalempfänger mit einem optischen Reflexionspfad des ersten Wellenlängenmultiplexfilters gekoppelt ist, und der Testsignalsender mit einem optischen Reflexionspfad des zweiten Wellenlängenmultiplexfilters gekoppelt ist, der Datensignalsender mit einem optischen Transmissionspfad des optischen Splitterfilters gekoppelt ist, und der Testsignalempfänger mit einem optischen Reflexionspfad des optischen Splitterfilters gekoppelt ist.

9. Optisches Sendeempfängermodul nach Anspruch 7, wobei der Testsignalsender mit einem optischen Reflexionspfad des ersten Wellenlängenmultiplexfilters gekoppelt ist, und der Datensignalempfänger mit einem optischen Reflexionspfad des zweiten Wellenlängenmultiplexfilters gekoppelt ist, der Datensignalsender mit einem optischen Transmissionspfad des optischen Splitterfilters gekoppelt ist, und der Testsignalempfänger mit einem optischen Reflexionspfad des optischen Splitterfilters gekoppelt ist.

10. Optisches Sendeempfängermodul nach Anspruch 6, wobei die Filterkomponente ein erstes Wellenlängenmultiplexfilter, ein zweites Wellenlängenmultiplexfilter und ein drittes Wellenlängenmultiplexfilter umfasst, die auf einem optischen Hauptpfad in einer Richtung, die sich vom Faseradapter erstreckt, der Reihe nach angeordnet sind;
wobei das erste Wellenlängenmultiplexfilter konfiguriert ist zum: Durchlassen eines optischen Signals, das die erste Wellenlänge aufweist, und teilweisen Reflektieren und teilweisen Durchlassen eines optischen Signals, das die zweite Wellenlänge aufweist; das zweite Wellenlängenmultiplexfilter konfiguriert ist zum: teilweisen Reflektieren und teilweisen Durchlassen des optischen Signals, das die erste Wellenlänge aufweist, und Durchlassen des optischen Signals, das die zweite Wellenlänge aufweist; und das dritte Wellenlängenmultiplexfilter konfiguriert ist zum: Durchlassen des optischen Signals, das die erste Wellenlänge aufweist, und Reflektieren des optischen Signals, das die zweite Wellenlänge aufweist.

11. Optisches Sendeempfängermodul nach Anspruch 10, wobei der Datensignalempfänger mit einem optischen Reflexionspfad des ersten Wellenlängenmultiplexfilters gekoppelt ist, der Testsignalempfänger mit einem optischen Reflexionspfad des zweiten Wellenlängenmultiplexfilters gekoppelt ist, der Datensignalsender mit einem optischen Transmissionspfad des dritten Wellenlängenmultiplexfilters gekoppelt ist, und der Testsignalsender mit einem optischen Reflexionspfad des dritten Wellenlängenmultiplexfilters gekoppelt ist.

12. Optisches Sendeempfängermodul nach Anspruch 6, wobei die Filterkomponente ein erstes optisches Splitterfilter, ein zweites optisches Splitterfilter und ein Wellenlängenmultiplexfilter umfasst;
wobei das Wellenlängenmultiplexfilter auf einem optischen Hauptpfad, der sich vom Faseradapter erstreckt, angeordnet und so konfiguriert ist, dass es ein optisches Signal durchlässt, das die erste Wellenlänge aufweist, und ein optisches Signal reflektiert, das die zweite Wellenlänge aufweist;
das erste optische Splitterfilter auf einem optischen Reflexionspfad des Wellenlängenmultiplexfilters angeordnet und so konfiguriert ist, dass es das optische Signal, das die erste Wellenlänge aufweist, teilweise reflektiert und teilweise durchlässt; und
das zweite optische Splitterfilter auf einem optischen Transmissionspfad des Wellenlängenmultiplexfilters angeordnet und so konfiguriert ist, dass es das optische Signal, das die zweite Wellenlänge aufweist, teilweise reflektiert und teilweise durchlässt.

13. Optisches Sendeempfängermodul nach Anspruch 12, wobei der Testsignalsender und der Datensignalempfänger jeweils mit einem optischen Transmissionspfad und einem optischen Reflexionspfad des ersten optischen Splitterfilters gekoppelt und mit dem ersten optischen Splitterfilter in ein erstes TO-CAN-Modul gepackt sind; und
der Datensignalsender und der Testsignalempfänger jeweils mit einem optischen Transmissionspfad und einem optischen Reflexionspfad des zweiten optischen Splitterfilters gekoppelt und mit dem zweiten optischen Splitterfilter in ein zweites TO-CAN-Modul gepackt sind.

14. Optisches Sendeempfängermodul nach Anspruch 6, wobei die Filterkomponente ein optisches Splitterfilter, ein erstes Wellenlängenmultiplexfilter und ein zweites Wellenlängenmultiplexfilter umfasst;
wobei das optische Splitterfilter auf einem optischen Hauptpfad, der sich vom Faseradapter erstreckt, angeordnet und so konfiguriert ist, dass es ein optisches Signal, das die erste Wellenlänge aufweist, teilweise durchlässt und teilweise reflektiert und ein optisches Signal, das die zweite Wellenlänge aufweist, teilweise durchlässt und teilweise reflektiert;
das erste Wellenlängenmultiplexfilter auf einem optischen Reflexionspfad des optischen Splitterfilters angeordnet und so konfiguriert ist, dass es das optische Signal durchlässt, das die zweite Wellenlänge aufweist, und das optische Signal reflektiert, das die erste Wellenlänge aufweist; und
das zweite Wellenlängenmultiplexfilter auf einem optischen Transmissionspfad des optischen Splitterfilters angeordnet und so konfiguriert ist, dass es das optische Signal durchlässt, das die erste Wellenlänge aufweist, und das optische Signal reflektiert, das die zweite Wellenlänge aufweist.

15. Optisches Sendeempfängermodul nach Anspruch 14, wobei der Testsignalsender und der Testsignalempfänger jeweils mit einem optischen Transmissionspfad und einem optischen Reflexionspfad des ersten Wellenlängenmultiplexfilters gekoppelt und mit dem ersten Wellenlängenmultiplexfilter in ein erstes TO-CAN-Modul gepackt sind; und
der Datensignalsender und der Datensignalempfänger jeweils mit einem optischen Transmissionspfad und einem optischen Reflexionspfad des zweiten Wellenlängenmultiplexfilters gekoppelt und mit dem zweiten Wellenlängenmultiplexfilter in ein zweites TO-CAN-Modul gepackt sind.

16. Passives optisches Netzwerksystem (100), umfassend ein optisches Leitungsendgerät (110), mehrere optische Netzwerkeinheiten (120) und ein optisches Verteilungsnetzwerk (130), wobei das optische Leitungsendgerät (110) durch das optische Verteilungsnetzwerk (130) mit den mehreren optischen Netzwerkeinheiten (120) verbunden ist, **dadurch gekennzeichnet, dass** das optische Leitungsendgerät und/oder die optischen Netzwerkeinheiten ein optisches Sendeempfängermodul umfassen, in das eine Testfunktion integriert ist, und wobei das optische Sendeempfängermodul (300) das optische Sendeempfängermodul (200) nach einem der Ansprüche 1 bis 15 ist.

17. Optisches Leitungsendgerät, umfassend ein Datenverarbeitungsmodul (201) und ein optisches Sendeempfängermodul (200), **dadurch gekennzeichnet, dass** das optische Sendeempfängermodul (200) das optische Sendeempfängermodul nach einem der Ansprüche 1 bis 15 ist, das Datenverarbeitungsmodul (201) so konfiguriert ist, dass es ein erstes Datensignal für das optische Sendeempfängermodul zur Übertragung bereitstellt und Datenverarbeitung für ein zweites Datensignal durchführt, das durch das optische Sendeempfängermodul empfangen wird, und das Datenverarbeitungsmodul (201) ferner so konfiguriert ist, dass es eine optische Leitung gemäß einem ersten Reflexionssignal und einem zweiten Reflexionssignal analysiert, die durch das optische Sendeempfängermodul empfangen werden.

## Revendications

1. Module émetteur-récepteur optique (200), comprenant un composant optique (220) et un composant de commande (210) relié au composant optique (220), **caractérisé en ce que** le composant optique (220) comprend :
un émetteur de signal de données (221), configuré pour transmettre un premier signal de données qui est porté par une première longueur d'onde et transmettre un premier signal de test qui a la première longueur d'onde à un réseau optique sous le contrôle du composant de commande, le premier signal de données étant un signal de données aval, le premier signal de test étant un signal de test aval ;
un récepteur de signal de test (225), configuré pour recevoir un premier signal de réflexion généré comme un résultat de réflexion du premier signal de test qui se produit dans le réseau optique ;
un émetteur de signal de test (224) configuré pour transmettre un deuxième signal de test qui est porté par une deuxième longueur d'onde qui est une longueur d'onde de signal de données amont au réseau optique sous le contrôle du composant de commande, le deuxième signal de test étant un signal de test amont ; et
un récepteur de signal de données (222), configuré pour recevoir un deuxième signal de données qui a la deuxième longueur d'onde et recevoir un deuxième signal de réflexion généré comme un résultat de réflexion du deuxième signal de test qui se produit dans le réseau optique, le deuxième signal de données étant un signal de données amont.

2. Module émetteur-récepteur optique selon la revendication 1, dans lequel le composant de commande (210) comprend un processeur de test (211), un circuit de commande de signal de données (212), et un circuit de commande de signal de test (213) ;
le processeur de test (211) est configuré pour démarrer un mode de test et prétraiter le premier signal de réflexion et le deuxième signal de réflexion qui sont retournés par le récepteur de signal de test et le récepteur de signal de données ; et
le circuit de commande de signal de test (213) et le circuit de commande de signal de données (212) sont configurés pour commander, sous le contrôle du processeur de test, l'émetteur de signal de données et l'émetteur de signal de test pour transmettre respectivement le premier signal de test et le deuxième signal de test.

3. Module émetteur-récepteur optique selon la revendication 1, dans lequel le composant de commande comprend un processeur de test et un circuit de commande de signal de données ;
le processeur de test est configuré pour démarrer un mode de test et prétraiter le premier signal de réflexion et le deuxième signal de réflexion qui sont retournés par le récepteur de signal de test et le récepteur de signal de données ; et
le circuit de commande de signal de données est configuré pour commander, sous le contrôle du processeur de test, l'émetteur de signal de données pour transmettre le premier signal de test, et le processeur de test est également configuré pour commander l'émetteur de signal de test pour transmettre le deuxième signal de test.

4. Module émetteur-récepteur optique selon la revendication 2 ou 3, dans lequel le circuit de commande de signal de données est également configuré pour : avant que le module émetteur-récepteur optique entre dans le mode de test, commander, sous le contrôle du processeur de test, l'émetteur de signal de données pour transmettre une instruction à un dispositif pair, l'instruction étant utilisée pour suspendre l'envoi du deuxième signal de données.

5. Module émetteur-récepteur optique selon la revendication 4, dans lequel le composant de commande (210) comprend en outre une unité de sélection de chemin (214), et l'unité de sélection de chemin (214) est configurée pour : transférer, dans un mode de communication normale, un deuxième signal de sortie reçu par le récepteur de signal de données à un module de traitement de données d'un terminal de ligne optique, et fournir, dans le mode de test, au processeur de test le deuxième signal de réflexion reçu par le récepteur de signal de données.

6. Module émetteur-récepteur optique selon la revendication 1, dans lequel le composant optique comprend en outre un adaptateur de fibre et un composant de filtrage, et l'émetteur de signal de données, le récepteur de signal de données, l'émetteur de signal de test et le récepteur de signal de test sont couplés à l'adaptateur de fibre au moyen du composant de filtrage ; et
le composant de filtrage est configuré pour : fournir à l'adaptateur de fibre le premier signal de données et le premier signal de test qui sont transmis par l'émetteur de signal de données ainsi que le deuxième signal de test transmis par l'émetteur de signal de test, et les délivrer au réseau optique ; le composant de filtrage est également configuré pour : fournir au récepteur de signal de données le deuxième signal de données et le deuxième signal de réflexion qui sont introduits depuis l'adaptateur de fibre, et fournir au récepteur de signal de test le premier signal de réflexion introduit depuis l'adaptateur de fibre.

7. Module émetteur-récepteur optique selon la revendication 6, dans lequel le composant de filtrage comprend un premier filtre de multiplexage par répartition en longueur d'onde, un deuxième filtre de multiplexage par répartition en longueur d'onde et un filtre de séparation optique qui sont disposés successivement sur un chemin optique principal dans une direction s'étendant depuis l'adaptateur de fibre ;
le premier filtre de multiplexage par répartition en longueur d'onde est configuré pour :
transmettre un signal optique qui a la première longueur d'onde, et réfléchir partiellement et transmettre partiellement un signal optique qui a la deuxième longueur d'onde ;
le deuxième filtre de multiplexage par répartition en longueur d'onde est configuré pour : transmettre le signal optique qui a la première longueur d'onde, et réfléchir le signal optique qui a la deuxième longueur d'onde ; et
le filtre de séparation optique est configuré pour réfléchir partiellement et transmettre partiellement le signal optique qui a la première longueur d'onde.

8. Module émetteur-récepteur optique selon la revendication 7, dans lequel le récepteur de signal de données est couplé à un chemin optique réfléchissant du premier filtre de multiplexage par répartition en longueur d'onde, et l'émetteur de signal de test est couplé à un chemin optique réfléchissant du deuxième filtre de multiplexage par répartition en longueur d'onde, l'émetteur de signal de données est couplé à un chemin optique transmissif du filtre de séparation optique, et le récepteur de signal de test est couplé à un chemin optique réfléchissant du filtre de séparation optique.

9. Module émetteur-récepteur optique selon la revendication 7, dans lequel l'émetteur de signal de test est couplé à un chemin optique réfléchissant du premier filtre de multiplexage par répartition en longueur d'onde, et le récepteur de signal de données est couplé à un chemin optique réfléchissant du deuxième filtre de multiplexage par répartition en longueur d'onde, l'émetteur de signal de données est couplé à un chemin optique transmissif du filtre de séparation optique, et le récepteur de signal de test est couplé à un chemin optique réfléchissant du filtre de séparation optique.

10. Module émetteur-récepteur optique selon la revendication 6, dans lequel le composant de filtrage comprend un premier filtre de multiplexage par répartition en longueur d'onde, un deuxième filtre de multiplexage par répartition en longueur d'onde et un troisième filtre de multiplexage par répartition en longueur d'onde qui sont disposés successivement sur un chemin optique principal dans une direction s'étendant depuis l'adaptateur de fibre ;
le premier filtre de multiplexage par répartition en longueur d'onde est configuré pour :
transmettre un signal optique qui a la première longueur d'onde, et réfléchir partiellement et transmettre partiellement un signal optique qui a la deuxième longueur d'onde ;
le deuxième filtre de multiplexage par répartition en longueur d'onde est configuré pour : réfléchir partiellement et transmettre partiellement le signal optique qui a la première longueur d'onde, et transmettre le signal optique qui a la deuxième longueur d'onde ; et
le troisième filtre de multiplexage par répartition en longueur d'onde est configuré pour : transmettre le signal optique qui a la première longueur d'onde, et réfléchir le signal optique qui a la deuxième longueur d'onde.

11. Module émetteur-récepteur optique selon la revendication 10, dans lequel le récepteur de signal de données est couplé à un chemin optique réfléchissant du premier filtre de multiplexage par répartition en longueur d'onde, le récepteur de signal de test est couplé à un chemin optique réfléchissant du deuxième filtre de multiplexage par répartition en longueur d'onde, l'émetteur de signal de données est couplé à un chemin optique transmissif du troisième filtre de multiplexage par répartition en longueur d'onde, et l'émetteur de signal de test est couplé à un chemin optique réfléchissant du troisième filtre de multiplexage par répartition en longueur d'onde.

12. Module émetteur-récepteur optique selon la revendication 6, dans lequel le composant de filtrage comprend un premier filtre de séparation optique, un deuxième filtre de séparation optique, et un filtre de multiplexage par répartition en longueur d'onde ;
le filtre de multiplexage par répartition en longueur d'onde est disposé sur un chemin optique principal qui s'étend depuis l'adaptateur de fibre, et est configuré pour transmettre un signal optique qui a la première longueur d'onde et réfléchir un signal optique qui a la deuxième longueur d'onde ;
le premier filtre de séparation optique est disposé sur un chemin optique réfléchissant du filtre de multiplexage par répartition en longueur d'onde, et est configuré pour réfléchir partiellement et transmettre partiellement le signal optique qui a la première longueur d'onde ; et
le deuxième filtre de séparation optique est disposé sur un chemin optique transmissif du filtre de multiplexage par répartition en longueur d'onde, et est configuré pour réfléchir partiellement et transmettre partiellement le signal optique qui a la deuxième longueur d'onde.

13. Module émetteur-récepteur optique selon la revendication 12, dans lequel l'émetteur de signal de test et le récepteur de signal de données sont respectivement couplés à un chemin optique transmissif et un chemin optique réfléchissant du premier filtre de séparation optique, et conditionnés avec le premier filtre de séparation optique dans un premier module TO-CAN ; et
l'émetteur de signal de données et le récepteur de signal de test sont respectivement couplés à un chemin optique transmissif et un chemin optique réfléchissant du deuxième filtre de séparation optique, et conditionnés avec le deuxième filtre de séparation optique dans un deuxième module TO-CAN.

14. Module émetteur-récepteur optique selon la revendication 6, dans lequel le composant de filtrage comprend un filtre de séparation optique, un premier filtre de multiplexage par répartition en longueur d'onde, et un deuxième filtre de multiplexage par répartition en longueur d'onde ;
le filtre de séparation optique est disposé sur un chemin optique principal qui s'étend depuis l'adaptateur de fibre, et est configuré pour transmettre partiellement et réfléchir partiellement un signal optique qui a la première longueur d'onde et transmettre partiellement et réfléchir partiellement un signal optique qui a la deuxième longueur d'onde ;
le premier filtre de multiplexage par répartition en longueur d'onde est disposé sur un chemin optique réfléchissant du filtre de séparation optique, et est configuré pour transmettre le signal optique qui a la deuxième longueur d'onde et réfléchir le signal optique qui a la première longueur d'onde ; et
le deuxième filtre de multiplexage par répartition en longueur d'onde est disposé sur un chemin optique transmissif du filtre de séparation optique, et est configuré pour transmettre le signal optique qui a la première longueur d'onde et réfléchir le signal optique qui a la deuxième longueur d'onde.

15. Module émetteur-récepteur optique selon la revendication 14, dans lequel l'émetteur de signal de test et le récepteur de signal de test sont respectivement couplés à un chemin optique transmissif et un chemin optique réfléchissant du premier filtre de multiplexage par répartition en longueur d'onde, et conditionnés avec le premier filtre de multiplexage par répartition en longueur d'onde dans un premier module TO-CAN ; et
l'émetteur de signal de données et le récepteur de signal de données sont respectivement couplés à un chemin optique transmissif et un chemin optique réfléchissant du deuxième filtre de multiplexage par répartition en longueur d'onde, et conditionnés avec le deuxième filtre de multiplexage par répartition en longueur d'onde dans un deuxième module TO-CAN.

16. Système de réseau optique passif (100), comprenant un terminal de ligne optique (110), de multiples unités de réseau optique (120) et un réseau de distribution optique (130), le terminal de ligne optique (110) étant relié aux multiples unités de réseau optique (120) par le réseau de distribution optique (130), **caractérisé en ce que** le terminal de ligne optique et/ou les unités de réseau optique comprennent un module émetteur-récepteur optique dans lequel est intégrée une fonction de test, et le module émetteur-récepteur optique (300) est le module émetteur-récepteur optique (200) selon l'une quelconque des revendications 1 à 15.

17. Terminal de ligne optique, comprenant un module de traitement de données (201) et un module émetteur-récepteur optique (200), **caractérisé en ce que** le module émetteur-récepteur optique (200) est le module émetteur-récepteur optique selon l'une quelconque des revendications 1 à 15, le module de traitement de données (201) est configuré pour fournir un premier signal de données pour le module émetteur-récepteur optique pour transmission et effectuer un traitement de données pour un deuxième signal de données reçu par le module émetteur-récepteur optique, et le module de traitement de données (201) est également configuré pour analyser une ligne optique en fonction d'un premier signal de réflexion et d'un deuxième signal de réflexion qui sont reçus par le module émetteur-récepteur optique.
